# FASCICULE DE BREVET EUROPEEN

(11) **EP 3 682 176 B1**
(45) Date de publication et mention de la délivrance du brevet: **22.03.2023**
(21) Numéro de dépôt: 18785696.8
(22) Date de dépôt: 07.09.2018
(51) Int. Cl.: F25B 17/08, F25B 27/00, F25B 35/04, F25B 49/04, C09K 5/16

(54) **PROCEDE DE REFRIGERATION D'UN CAISSON ISOTHERME JUSQU'A UNE TEMPERATURE CIBLE ET INSTALLATION ASSOCIEE**
VERFAHREN ZUM KÜHLEN EINER ISOTHERMISCHEN BOX AUF EINE ZIELTEMPERATUR UND ZUGEHÖRIGE ANLAGE
METHOD FOR REFRIGERATING AN ISOTHERMAL BOX TO A TARGET TEMPERATURE AND ASSOCIATED FACILITY

(30) Priorité: 11.09.2017 FR 1770948
(43) Date de publication de la demande: 22.07.2020
(73) Titulaire: Centre National de la Recherche Scientifique, 75016 Paris (FR)
(72) Inventeur: PUBILL, Aleix, 66210 Saint Pierre dels Forcats (FR); RIGAUD, Laurent, 66500 St Hippolyte (FR); TADIOTTO, David, 66430 Bompas (FR); STITOU, Driss, 66570 Saint Nazaire en Roussillon (FR); MAZET, Nathalie, 66100 Perpignan (FR)
(74) Mandataire: LLR
(86) Numéro de dépôt international: PCT/FR2018/052186
(87) Numéro de publication internationale: WO 2019/048793

(56) Documents cités:
- EP-A2- 0 443 620
- WO-A1-88/09466
- WO-A1-2016/055127
- DE-A1- 2 846 728

## Description

La présente invention concerne un procédé de réfrigération d'un caisson isotherme jusqu'à une température cible et une installation permettant la mise en oeuvre de ce procédé.

La chaîne du froid assure l'approvisionnement de plus de la moitié des denrées alimentaires et sanitaires. Le transport réfrigéré de ces marchandises thermosensibles utilise majoritairement des véhicules qui comportent un caisson isotherme (thermiquement isolé), réfrigéré et un système de réfrigération basé sur des cycles de compression mécanique d'un gaz frigorigène, souvent fluoré, où le compresseur mécanique est alimenté, soit par l'alternateur du moteur du véhicule, soit par un moteur à combustion interne spécialement dédié. Cette solution entraîne une surconsommation de carburant de 1 à 3 litres pour 100 km parcourus, induisant une augmentation des rejets de CO₂.

La qualité des produits thermosensibles est fortement liée aux fluctuations de température, tout au long de la chaine de froid. La règlementation est de plus en plus exigeante et contraint de justifier d'un maintien en température précis et contrôlé, pendant toute la durée du transport, jusqu'à l'utilisateur final. Un produit thermosensible qui est transporté dans différents caissons isothermes de son point de départ à son point final, subit inévitablement des oscillations de température dues aux ouvertures du compartiment réfrigéré et aux transvasements du produit dans les lieux de distribution. Afin d'éviter ces fluctuations thermiques, des caissons isothermes déjà mis en température doivent alors être mis à disposition lors des déchargements pour la redistribution logistique.

Afin de limiter la consommation énergétique liée au maintien des caissons vides en attente de chargement, dans le cas du transport logistique à une température négative, des dispositifs de production de froid de forte puissance doivent alors être utilisés pour descendre très rapidement la température du caisson en attente, au moment où il est utilisé ou juste avant son utilisation, de la température ambiante à des températures cibles précises pouvant, par exemple, être comprises entre -20°C et -30°C. Ensuite la température cible doit être maintenue pendant plusieurs heures dans le caisson isotherme.

Le document FR 2 873 793 décrit un système thermochimique qui comprend un évaporateur et un réacteur thermochimique. Le réacteur contient un composé réactif, un sel, notamment un sel métallique, capable de réagir chimiquement avec la phase vapeur d'un fluide liquéfié contenu dans l'évaporateur ou dans un réservoir relié à l'évaporateur. Lorsque l'on ouvre la vanne de manière à mettre en communication fluidique le réacteur thermochimique et l'évaporateur, la phase gaz du fluide se répand dans le réacteur et est consommée dans la réaction chimique de synthèse avec le sel. Le fluide en phase liquide se vaporise dans l'évaporateur, absorbant de la chaleur et générant donc du froid autour de l'évaporateur. La réaction chimique de synthèse entre la phase gaz du fluide et le mélange réactif contenu dans le réacteur est, elle, une réaction exothermique réversible qui aboutit donc à un équilibre. Lorsque la pression d'équilibre et la température d'équilibre définies pour la réaction exothermique sont atteintes dans le réacteur, la quantité de fluide en phase gaz consommée par la réaction exothermique et égale à la quantité de fluide en phase gaz qui est régénérée par la réaction endothermique inverse.

Le document WO 2014/013146 A1 décrit un système de réfrigération d'une enceinte qui utilise un groupe frigorifique à compression et un système de réfrigération comprenant un réacteur thermochimique pouvant être mis en communication fluidique à un évaporateur contenant un fluide en phase liquide en équilibre avec sa phase gaz, au moyen d'une vanne. Ce type d'installation ne peut pas être utilisé sans apport d'énergie extérieur du fait du compresseur du groupe frigorifique. Néanmoins, il permet du fait de la présence du système thermochimique d'atteindre plus rapidement qu'avec le seul groupe frigorifique des températures basses.

Le document WO 88/09466 A1 décrit un dispositif qui comporte au moins deux réacteurs thermochimiques, un évaporateur, un condenseur, un collecteur de gaz et des moyens pour déclencher successivement les réactions solide-gaz dans les deux réacteurs à partir du gaz provenant de l'évaporateur et commander les ouvertures et fermetures des différents circuits de communication dans un ordre prédéterminé pour obtenir une production de froid continue. Dans ce document, l'évaporateur est connecté à un premier réacteur. Une fois que l'équilibre réactionnel est atteint dans ce réacteur et que donc la pression du gaz est constante, on bascule sur le second réacteur, le premier étant alors régénéré. Ce document représente l'état de la technique le plus proche de l'invention.

Par ailleurs, le document WO 2016/055127 A1 décrit un système de réfrigération qui n'est pas thermochimique mais met en oeuvre l'adsorption d'un gaz sur un solide, en l'occurrence la vapeur d'eau sur un gel de silice. Le dispositif comporte au moins deux réacteurs à adsorption, chacun relié à un évaporateur. L'évaporateur est d'abord mis en communication avec un premier réacteur puis lorsque l'équilibre de la réaction d'adsorption est atteint, l'évaporateur est mis en communication avec un autre réacteur. Le basculement d'un réacteur vers l'autre peut être commander par la mesure d'une pression et/ou d'une température ad hoc. La puissance frigorifique est régulée par le débit de gaz entrant dans les réacteurs. Un tel dispositif ne permet pas d'obtenir la même puissance frigorifique qu'un système thermochimique.

Un but de la présente invention est de proposer un procédé de réfrigération d'un caisson thermiquement isolant qui permet d'augmenter la puissance frigorifique et donc d'augmenter la vitesse de descente en température du caisson.

Un autre but de la présente invention est de proposer un procédé tel que précité qui permet d'obtenir rapidement sensiblement la température cible.

Un autre but de la présente invention est de fournir un procédé de réfrigération d'un caisson thermiquement isolant jusqu'à une température sensiblement égale à une température cible Tc qui permet également de maintenir la température du caisson sensiblement égale à la température cible, éventuellement sans apport d'énergie extérieur pour la production de froid, notamment.

La présente invention concerne donc un procédé de réfrigération d'un caisson thermiquement isolant jusqu'à une température cible Tc comme défini par la revendication indépendante 1.

Le fait de refroidir le réacteur connecté à l'évaporateur permet d'empêcher l'établissement de l'équilibre dans le réacteur. La réaction de synthèse se poursuite donc engendrant ainsi l'évaporation du fluide dans l'évaporateur. On produit ainsi du froid au niveau de l'évaporateur.

Les Demandeurs ont remarqué que la température du réacteur en communication fluidique avec l'évaporateur n'augmentait pas immédiatement du fait du stockage d'une partie de la chaleur dégagée par le réacteur dans le réacteur lui-même. Dans un premier temps, la chaleur dégagée par la réaction de synthèse est donc dissipée dans le réacteur lui-même, par conduction, notamment. Cette première étape d'évacuation de la chaleur est rapide et permet donc de générer rapidement du froid au niveau de l'évaporateur du fait de l'évaporation rapide du fluide.

Le fait de mesurer/déterminer la température du réacteur thermochimique en connexion fluidique avec l'évaporateur permet de basculer vers un autre réacteur avant l'établissement de l'équilibre dans réacteur connecté à l'évaporateur ; on évite ainsi l'augmentation de pression et de température dans l'évaporateur qui conduirait à une baisse de la puissance frigorifique de l'évaporateur. L'évaporateur est donc ainsi connecté à un autre réacteur thermochimique avant l'établissement de l'équilibre. On reproduit alors les conditions qui permettent d'obtenir pendant un cours laps de temps un pic de puissance frigorifique au niveau de l'évaporateur. En faisant se succéder ces pics, on parvient à optimiser la puissance frigorifique de l'évaporateur et à abaisser rapidement la température dans le caisson.

Le fait de déterminer la température de chacun des autres réacteurs non connectés permet de s'assurer à la fois que la pression de ce réacteur est inférieure à la pression dans l'évaporateur et également d'éviter de connecter l'évaporateur à un réacteur trop chaud qui risquerait de déplacer l'équilibre dans l'évaporateur, par transfert thermique des fluides en phase circulant dans l'ensemble évaporateur connecté au réacteur chaud. Les fluides en phase gaz chauds augmenteraient la température et la pression dans l'évaporateur et donc réduiraient sa puissance frigorifique.

Lorsque tous les réacteurs contiennent le même mélange réactif, avantageusement, on met en oeuvre les étapes I et Il avec lesdits réacteurs et l'on maintient l'écart entre ladite température Tc dans ledit caisson et ladite température cible Tc égal à un troisième écart ΔT3, au moyen de l'ensemble de n réacteurs et distinct dudit réacteur Ri.

Quand tous les réacteurs ne comportent pas le même composé réactif, une fois que l'écart entre ladite température dans ledit caisson et ladite température cible Tc est égal à un troisième écart ΔT3, on réitère les étapes I et II en mettant alternativement ledit évaporateur en communication fluidique avec seulement une partie des n+1 réacteurs thermochimiques de ladite installation pour maintenir l'écart entre ladite température dans ledit caisson et ladite température cible Tc égal à un troisième écart ΔT3, les autres réacteurs thermochimiques restant isolés dudit évaporateur. Avantageusement, on va d'abord connecter l'évaporateur aux réacteurs qui contiennent un mélange réactif donc la courbe d'équilibre sur un diagramme Clausius-Clapeyron se situe la plus à droite. Ces composés dont les produits de réaction se régénèrent à une plus haute température sont utilisés pour obtenir la température cible mais pas pour le maintien en température du caisson. Le mélange réactif qu'ils contiennent peut-être totalement consommé dans la réaction de synthèse exothermique pendant la phase permettant d'atteindre la température cible.

Il est également possible, quel que soit le mode de mise en oeuvre, dans l'étape I, de mettre en communication fluidique ledit évaporateur simultanément ou de manière décalée dans le temps avec au moins deux réacteurs thermochimiques et notamment avec deux réacteurs thermochimiques. On augmente ainsi la détente du fluide en phase gaz et donc la vaporisation du fluide en phase liquide ce qui permet d'augmenter la puissance frigorifique au niveau de l'évaporateur.

On peut évacuer la chaleur par convection forcée, ce qui est simple à mettre en oeuvre.

Selon l'invention, la chaleur dégagée par ladite réaction chimique de synthèse au niveau de chacun desdits réacteurs est évacuée au moins partiellement par conduction, et éventuellement additionnellement aussi par convection forcée.

Selon l'invention, on connecte thermiquement entre eux une partie desdits n+1 réacteurs thermochimiques et notamment on peut connecter thermiquement deux-à-deux lesdits réacteurs thermochimiques thermiquement connectés et mettre en communication fluidique une partie desdits réacteurs thermiquement connectés avec ledit évaporateur, l'autre partie étant isolée dudit évaporateur, et on évacue au moins partiellement par conduction la chaleur dégagée par la réaction exothermique de synthèse dans lesdits réacteurs en communication fluidique avec ledit évaporateur vers lesdits réacteurs isolés dudit évaporateur. On peut ainsi parfois se passer de l'évacuation de la chaleur par convexion forcée.

Avantageusement, lesdits réacteurs connectés thermiquement forment des paires de réacteurs thermochimiques, on met ledit deuxième réacteur thermochimique de chacune desdites paires en communication fluidique avec au moins un condenseur, ledit deuxième réacteur thermochimique contenant une quantité de produit de réaction obtenu lors de ladite réaction chimique de synthèse et éventuellement un mélange contenant un composé réactif Si n'ayant pas encore réagit, on met en oeuvre ladite étape I en utilisant lesdits premiers réacteurs thermochimiques puis ladite étape II en utilisant lesdits deuxièmes réacteurs thermochimiques ou on met en oeuvre lesdites étapes I et Il en utilisant lesdits premiers réacteurs thermochimiques et on évacue, notamment, par conduction, toute la chaleur dégagée lors de la réaction de synthèse dans lesdits premiers réacteurs vers lesdits deuxièmes réacteurs pour décomposer ledit produit de réaction contenu dans lesdits deuxièmes réacteurs et condenser, dans ledit condenseur, ledit fluide en phase vapeur qui a été régénéré dans lesdits deuxièmes réacteurs, la condensation ayant notamment lieu à la température dudit condenseur, laquelle peut être la température extérieure audit caisson. Avantageusement, on évacue toute la chaleur de ladite réaction de synthèse desdits premiers réacteurs vers lesdits deuxièmes réacteurs de manière à décomposer le produit de réaction contenus dans lesdits deuxièmes réacteurs. L'évacuation de la chaleur ne nécessite ainsi aucun apport d'énergie électrique.

Un but de la présente invention est de proposer une installation de réfrigération d'un caisson thermiquement isolant qui permet de réfrigérer ledit caisson jusqu'à une température cible et qui est apte à fonctionner sans apport d'énergie externe à l'installation ou avec un apport limité.

Un autre but de la présente invention est de proposer une installation telle que précitée qui permet, de plus, de maintenir la température du caisson sensiblement égale à la température cible, sans apport d'énergie extérieur à ladite installation.

La présente invention concerne une installation de réfrigération d'un caisson thermiquement isolant jusqu'à sensiblement une température cible Tc, apte à permettre la mise en oeuvre du procédé de l'invention. Une telle installation selon l'invention est définie par la revendication indépendante 4.

L'installation de l'invention ne comporte que des réacteurs thermochimiques et aucun compresseur. Elle est donc capable de refroidir l'intérieur du caisson jusqu'à la température cible sans apport d'énergie externe ; l'installation comporte selon une réalisation de l'invention également une batterie électrique apte à alimenter les moyens d'évacuations de la chaleur quand ceux-ci sont du type nécessitant une telle alimentation.

Les moyens de détermination de la pression Pev et/ou de la température Tev dans ledit évaporateur E et/ou les des moyens de détermination de la température Ti dans chaque réacteur thermochimique Ri des n+1 réacteurs ne sont pas limités selon l'invention. Il peut s'agir de capteurs de pression et/ou de sondes thermiques qui permettent soit de directement mesurer le paramètre considéré soit de calculer en fonction d'au moins un autre paramètre et des courbes d'équilibre des différents systèmes diphasique de l'installation.

Les moyens de contrôle peuvent comprendre un microprocesseur ou un microcontrôleur.

L'Homme du Métier est à même de choisir le ou les mélanges réactifs ainsi que le nombre de réacteurs thermochimiques et leur volume en fonction de la température cible et du volume du caisson à réfrigérer. Plus le nombre de réacteurs est important, plus on bascule rapidement l'évaporateur sur un autre réacteur dont la température et/ou la pression sont tels que précitées et donc moins on perd de puissance frigorifique au niveau de l'évaporateur.

Le fluide peut être l'ammoniac et le mélange réactif un mélange de graphite naturel expansé avec un sel choisi parmi les sels métalliques, les sels alcalins et les sels alcalino-terreux

Selon un mode de réalisation particulier, elle comporte au moins trois réacteurs thermochimiques. Ce nombre permet d'obtenir rapidement la température cible sans que l'installation soit trop coûteuse à fabriquer ni trop encombrante.

Tous lesdits réacteurs peuvent comporter le même composé réactif. Ils peuvent alors être tous utilisés pour maintenir la température dans le caisson selon le procédé de l'invention.

Selon un autre mode de réalisation, les réacteurs comportent chacun un mélange réactif différent des autres.

Selon un autre mode de réalisation, une partie desdits n+1 réacteurs thermochimiques comportent un même mélange réactif Si, les autres réacteurs thermochimiques comprenant chacun un mélange réactif Si+1 différent de Si, lesdits mélanges réactifs Si+1 pouvant être tous identiques entre eux, certains différents et certains identiques entre eux ou tous différents les uns des autres.

Selon un mode de réalisation particulier des moyens d'évacuation de la chaleur qui peut être combiné avec l'un quelconque des modes de réalisation précités, lesdits moyens d'évacuation de chaleur permettent d'évacuer la chaleur par convexion forcée et notamment comportent au moins un ventilateur et/ou lesdits moyens d'évacuation de chaleur sont aptes à évacuer la chaleur par conduction et permettent éventuellement le stockage de la chaleur évacuée sous forme sensible, par stockage dans un matériau et/ou sous forme latente, du fait d'un changement d'état physique et/ou d'une réaction chimique du matériau dans lequel la chaleur est évacuée.

Les moyens d'évacuation de la chaleur par conduction et/ou stockage précités sont aptes à fonctionner sans apport d'énergie électrique, contrairement à des ventilateurs, par exemple. Ils permettent donc de réduire l'encombrement et le poids de l'installation (elle ne comporte plus de batterie, par exemple) et d'éviter le recours à toute source d'énergie électrique. L'installation est ainsi peu coûteuse et facile à transporter. L'utilisation d'un caloduc n'est pas exclue de la présente invention.

Selon l'invention, au moins une partie desdits n+1 réacteurs sont connectés thermiquement de manière à ce que lorsqu'une partie desdits réacteurs thermiquement connectés est en communication fluidique avec ledit évaporateur du fait de l'ouverture desdits moyens formant vanne, la partie restante desdits réacteurs thermiquement connectés est isolée dudit évaporateur et permet d'évacuer par conduction la chaleur dégagée par ladite de réaction de synthèse dans lesdits réacteurs en communication fluidique avec ledit évaporateur et également de stocker ladite chaleur évacuée sous forme sensible, du fait de la capacité calorifique massique du produit de réaction et/ou du mélange réactif et/ou sous forme latente du fait de la décomposition dudit produit de réaction. Dans cette installation, une partie des réacteurs sert à l'évacuation de la chaleur, ce qui permet de régénérer le mélange réactif et d'utiliser à nouveau les réacteurs régénérés pour la production de froid en les mettant à nouveau en communication fluidique avec l'évaporateur. Une telle installation est totalement autonome car les réacteurs assurent également la fonction de moyens de chauffage des réacteurs pour la décomposition du produit de réaction. Les réacteurs sont connectés thermiquement par conduction, et éventuellement additionnellement aussi par convection.

Ainsi une partie desdits réacteurs thermiquement connectés sont contenus les uns dans les autres et sont notamment imbriqués l'un dans l'autre, deux-à-deux, de manière à permettre une connexion thermique notamment par conduction en formant des paires de réacteurs thermochimiques thermiquement connectés.

Selon un mode de réalisation particulier, au moins une partie desdits réacteurs thermiquement connectés comportent des plaques creuses qui referment ledit mélange réactif et les plaques de deux réacteurs sont intercalées les unes avec les autres de manière à connecter thermiquement par conduction et/ou convection lesdits réacteurs thermochimiques.

Selon un mode de réalisation qui peut être combiné avec l'un quelconque précité, lesdits premiers réacteurs de chacune desdites paires de réacteurs thermochimiques thermiquement connectés sont chacun reliés audit évaporateur par une conduite spécifique à chacun desdits réacteurs et équipée de moyens formant vanne, l'installation comporte, en outre, au moins un condenseur qui est relié à chacun desdits deuxièmes réacteurs par une conduite équipée de moyens formant vanne, éventuellement, lesdits deuxièmes réacteurs thermochimiques sont éventuellement chacun reliés audit évaporateur par une conduite spécifique à chaque réacteur et équipée de moyens formant vanne, lesdits moyens de contrôle sont couplés auxdits moyens de comparaison et sont conformés pour mettre en communication fluidique ledit évaporateur, soit avec une partie desdits premiers réacteurs qui n'étaient pas connectés audit évaporateur, soit avec lesdits deuxièmes réacteurs, lorsque ces derniers peuvent être reliés audit évaporateur, lorsque lesdits moyens de comparaison ont déterminé que DTRi et/ou DTev est/sont inférieurs respectivement audit premier et audit deuxième écart.

Le fluide en phase gaz contenu dans le condenseur peut être le même que celui de l'évaporateur. Dans cette installation, les réacteurs thermochimiques se régénèrent l'un l'autre, sans apport d'énergie électrique.

L'évacuation de la chaleur est mise en oeuvre sans apport d'électricité par stockage de la chaleur du fait de la capacité calorifique massique des matériaux et du fait de la réaction chimique et du changement d'état du gaz, notamment (stockage sous forme latente).

Avantageusement, l'installation comporte une sonde thermique pour mesurer la température dans le caisson, une sonde thermique pour mesurer la température dans l'évaporateur et/ou un capteur de pression pour mesurer la pression dans ce dernier et une sonde de température disposée dans chacun des réacteurs ou au niveau de leur paroi pour mesurer la température de chacun des réacteurs. L'installation est ainsi robuste et peu coûteuse à fabriquer.

Selon un mode de réalisation particulier des moyens de détermination/mesure de la température de chaque réacteur, chaque réacteur thermochimique Ri comporte une paroi qui définit une enveloppe qui renferme ledit mélange réactif et lesdits moyens de détermination de la température de chaque réacteur thermochimique Ri comportent des moyens de mesure de la température de la paroi de chaque réacteur Ri.

### Définitions

Dans toute la présente demande, le terme « évaporateur » désigne tout dispositif comprenant un fluide en phase liquide et en phase gaz, en équilibre. Il peut s'agir d'un simple réservoir, par exemple.

Dans toute la présente demande, le fait d'atteindre la température cible indique que la température atteinte dans le caisson est égale à la température cible Tc plus le troisième écart donné qui correspond à une tolérance.

La présente invention, ses caractéristiques et les différents avantages qu'elle procure apparaitront plus clairement à la lecture de la description qui suit de quatre modes de réalisation/modes de mise en œuvre, présentés à titre d'exemples non limitatifs et qui fait référence aux dessins annexés sur lesquels :
- la Fig. 1 représente de manière schématique un premier mode de réalisation, qui ne forme pas partie de l'invention, ne montrant pas toutes les caractéristiques d'au moins une des revendications indépendantes, mais qui est utile pour comprendre la présente invention ;
- la Fig. 2 représente un diagramme de l'évolution de la puissance frigorifique de l'évaporateur de la Fig. 1 en fonction du temps, une fois qu'il a été mis en communication fluidique avec un réacteur thermochimique ;
- la Fig. 3 représente le diagramme de Clausius-Clapeyron de l'installation de la Fig. 1 ;
- la Fig. 4 représente les variations de la pression dans l'évaporateur et dans chacun des réacteurs de l'installation représentée sur la Fig. 1 ;
- la Fig. 5 représente le diagramme de Clausius-Clapeyron d'un deuxième mode de réalisation, qui ne forme pas partie de l'invention, ne montrant pas toutes les caractéristiques d'au moins une des revendications indépendantes, mais qui est utile pour comprendre la présente invention. ;
- la Fig. 6 représente de manière schématique un troisième mode de réalisation de l'invention ;
- la Fig. 7 représente le diagramme de Clausius- Clapeyron de l'installation représenté sur la Fig. 6 ;
- la Fig. 8 représente un quatrième mode de réalisation de l'invention ;
- la Fig. 9 représente le diagramme de Clausius-Clapeyron de l'installation représentée sur la Fig. 8 ;
- la Fig. 10 représente de manière schématique un cinquième mode de réalisation de l'installation de l'invention ;
- la Fig. 11 représente le diagramme de Clausius-Clapeyron de l'installation représentée sur la Fig. 10 ;
- la Fig. 12 représente de manière schématique un sixième mode de réalisation de l'installation de l'invention ; et
- la Fig. 13 représente le diagramme de Clausius-Clapeyron de l'installation représentée sur la Fig. 12 ;

L'invention est définie par les revendications indépendantes annexées.

### Premier mode de réalisation et de mise en œuvre, utile pour comprendre l'invention:

### Installation comportant 3 réacteurs comprenant le même sel réactif.

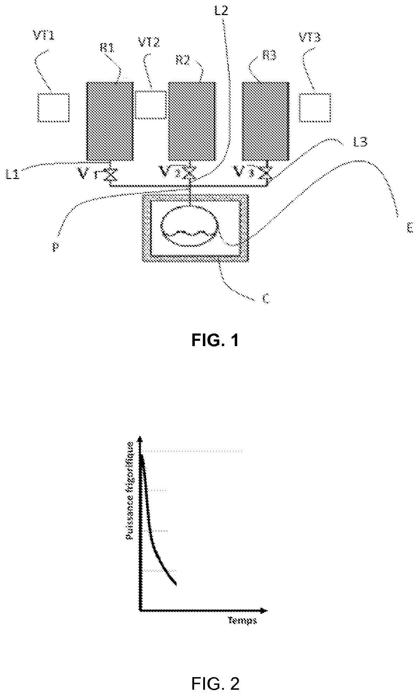

En référence à la Fig. 1, ce premier mode de réalisation comporte un réservoir E faisant office d'évaporateur et contenant un fluide en phase liquide en équilibre avec sa phase gaz. Ce réservoir/évaporateur E est situé dans un caisson isotherme C (ou caisson thermiquement isolant). L'intérieur du caisson C est donc réfrigéré par l'installation.

Le réservoir E est relié à une portion de conduite P qui traverse la paroi thermiquement isolante du caisson C. Cette portion de conduite P se divise ensuite en trois conduites, respectivement L1, L2 et L3. La conduite L1 relie l'intérieur du réservoir E avec l'intérieur du premier réacteur thermochimique R1. La première conduite L1 comporte une première vanne V1 montée en entrée du premier réacteur R1. La deuxième conduite L2 connecte l'intérieur du réservoir E avec l'intérieur du deuxième réacteur thermochimique R2. La deuxième conduite L2 comporte une deuxième vanne V2 montée en entrée du deuxième réacteur R2. La conduite L3 relie l'intérieur du réservoir E avec l'intérieur du troisième réacteur thermochimique R3. La troisième conduite L3 comporte une troisième vanne V3 montée en entrée du troisième réacteur R3. Chaque réacteur est équipé d'un ensemble comprenant au moins un ventilateur, VT1, VT2 et VT3 respectivement, adapté et disposé pour optimiser la dissipation par convexion forcée de la chaleur dégagée par chacun des réacteurs R1, R2 et R3.

Les moyens de contrôle et les moyens de mesure/détermination de la température ainsi que les moyens de comparaison ne sont pas représentés par souci de simplification. Ces moyens comportent une sonde de température disposée dans le réservoir E, une sonde de température placée dans le caisson C et un microcontrôleur ou un microprocesseur qui permet de comparer les valeurs. Ces sondes permettent de mesurer la température dans l'évaporateur E et la température dans le caisson C ce qui permet de déterminer l'écart entre ces deux températures. L'installation comporte également une sonde de température placée sur la paroi de chacun des réacteurs R1 à R3 et qui permet de mesurer l'évolution de la température dans chacun des réacteurs. L'installation comprend également un capteur de pression qui permet de mesurer la pression dans le réservoir/évaporateur E et/ou dans l'ensemble réservoir-réacteur thermochimique connecté audit réservoir E.

Le fonctionnement de ce premier mode de réalisation va être décrit en référence aux Fig. 1 à 3.

Comme représenté sur la Fig. 2, lorsque le réservoir E est mis en communication fluidique avec un réacteur thermochimique, la puissance frigorifique au niveau du réservoir augmente rapidement du fait de la différence de pression du fluide en phase gaz dans l'évaporateur et dans le réacteur thermochimique. La puissance frigorifique diminue ensuite de manière exponentielle à cause de l'équilibre pression/température qui s'installe dans le réacteur et qui dépend du mélange réactif utilisé dans le réacteur.

La mérite des Demandeurs est donc d'avoir pensé à utiliser les pics de puissance frigorifique du réservoir qui apparaissent pendant un cours laps de temps dès que ce dernier est mis en communication fluidique avec un réacteur thermochimique dont la pression est plus faible que la sienne. Plus la différence de pression entre le réservoir et le réacteur est grande, plus la puissance frigorifique générée est grande.

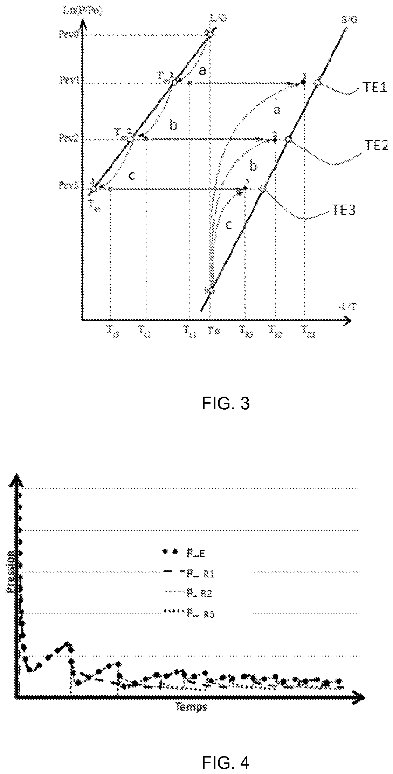

La Fig. 3 représente le diagramme de Clapeyron de l'installation de la Fig. 1. P0 correspond à la pression initiale dans le réservoir/évaporateur E. T0 est la température initiale dans le réservoir/évaporateur E. La droite L/G correspond à l'équilibre pression/température du système diphasique liquide/gaz présent dans le réservoir E. La droite S/G correspond à l'équilibre du système réactionnel phase gaz/phase solide présent dans chacun des réacteurs R1, R2 et R3, ceux-ci comprenant tous le même composé réactif.

### Phase a :

On met en communication le réservoir E et le réacteur R1 en ouvrant la vanne V1. Les vannes V2 et V3 sont fermées. Le fluide en phase gaz pénètre dans le premier réacteur R1 et réagit avec le mélange réactif qui n'a pas encore réagit. De préférence, le réacteur R1 vient juste d'être régénéré. Il en résulte un dégagement de chaleur dans le réacteur R1 du fait de la réaction chimique exothermique. Cette chaleur est en partie absorbée par le réacteur lui-même, c'est-à-dire emmagasinée sous forme de chaleur sensible par le mélange réactif qu'il contient, la paroi du réacteur et le produit de réaction formé ou déjà contenu dans le réacteur R1. Une autre partie de la chaleur est évacuée par l'ensemble de ventilateurs VT1. Le refroidissement du premier réacteur R1 déplace l'équilibre de la réaction exothermique qui se poursuit donc et continue d'engendrer le passage du fluide en phase liquide dans sa phase gaz, dans le réservoir E. La pression qui règne dans le réservoir E est la même que celle du réacteur R1 et est égale à Pev1.

Lorsque la chaleur de réaction ne peut plus être stockée dans le premier réacteur R1 ni être suffisamment évacuée par le groupe de ventilateurs VT1, un équilibre tend à s'établir dans le premier réacteur R1. La température de la paroi du premier réacteur R1 atteint alors une température TR1 proche de la température d'équilibre correspondant au point d'équilibre TE1 (voir Fig. 3) du système réactionnel gaz/solide du réacteur R1 à la pression Pev1. Cette température d'équilibre n'est pas explicitement indiquée sur la Fig. 3 ; elle se déduit de l'abscisse du point TE1 laquelle est égale à -1/température d'équilibre du point TE1. Le point d'équilibre TE1 est l'équilibre du système réactionnel du réacteur R1 à la pression Pev1, c'est-à-dire correspondant à la pression régnant dans le premier réacteur R1. La température dans le caisson C est alors de Tc1. Lorsque l'écart DT1 entre la température TR1 et la température correspondant au point d'équilibre TE1 est inférieur ou égal à un premier écart donné, on enclenche la phase b.

### Phase b :

Pour éviter que la vitesse d'évaporation devienne nulle dans le réservoir E, la *phase b* est enclenchée. On ferme la vanne V1 à l'entrée du réacteur R1. Le réacteur R1 est alors isolé du réservoir E et continue d'être refroidi par ventilation au moyen de l'ensemble de ventilateurs VT1, la pression dans le premier réacteur R1 baisse donc du fait du refroidissement du réacteur R1 et du fait de la réaction chimique exothermique qui peut se poursuivre dans le réacteur R1, les conditions de température et de pression étant modifiées. La vanne V2 est alors ouverte. Le réacteur R2 et le réservoir E sont mis en communication fluidique. La vanne V3 reste fermée. La vanne V1 également. Une nouvelle pression Pev2, plus basse que Pev1 (puisque d'une part, le fluide en phase gaz se détend du fait de l'augmentation du volume dans lequel il peut se répandre et d'autre part, il est consommé dans le réacteur R2), s'établit rapidement dans le réservoir E et le réacteur R2. La température du réservoir E diminue jusqu'à la valeur Tev2 qui est la température d'équilibre qui se déduit de la droite L/G. Le fluide en phase gaz passe du réservoir E vers le deuxième réacteur R2 et réagit avec le composé que contient ce dernier. Les mêmes phénomènes que décrits en référence à la phase a se produisent lors de cette phase b dans le deuxième réacteur R2. Dès que DTev qui est la différence entre la température Tc2 dans le caisson C et celle Tev2 dans le réservoir E est inférieure à un deuxième écart donné, la phase c est enclenchée. A ce moment, le deuxième réacteur R2 est à une température TR2 inférieure à sa température d'équilibre, laquelle se déduit de la lecture de l'abscisse du point d'équilibre TE2 du réacteur R2 pour la pression Pev2.

### Phase c :

La vanne V2 à l'entrée du réacteur R2 est fermée. Les réacteurs R1 et R2 sont toujours refroidis par ventilation par les ensembles de ventilateurs VT1, VT2 et VT3. Leur température et leur pression continuent de diminuer. La vanne V3 est ouverte. Le réacteur R3 et le réservoir E sont mis en communication fluidique. Le fluide en phase gaz contenu dans le réservoir E entre dans le troisième réacteur R3 et réagit avec le composé contenu dans ce dernier. Un équilibre s'établit, comme expliqué en référence à la phase a dans le troisième réacteur R3. La pression dans le réservoir E chute de nouveau jusqu'à la valeur Pev3 et une nouvelle température Tev3 plus basse est obtenue dans le réservoir E. La température dans le caisson C est alors de Tc3 qui est encore inférieure à Tc2 et à T0. La pression dans le réacteur R3 est égale à la pression dans le réservoir c'est-à-dire Pev3. La température TR3 du réacteur se rapproche de la température d'équilibre TE3 qui se déduit de la lecture de l'abscisse du point d'équilibre TE3. Le point d'équilibre TE3 indique la température d'équilibre du réacteur R3 quand la pression dans le réacteur est égale à Pev3. On détermine alors l'écart entre cette température d'équilibre au point TE3 et la température TR3 ou l'écart entre Tc3 dans le caisson C et la température cible.

### Phases suivantes :

Tant que la température cible n'est pas obtenue (à un écart de tolérance (écart cible) près) on répète alors la phase a, c'est-à-dire que la vanne V3 est fermée et la vanne V1 est ouverte. La vanne V2 reste fermée. Tous les réacteurs sont refroidis par ventilation. On détermine la pression directement par mesure ou indirectement par exemple par la mesure de la température de la paroi du réacteur, dans les réacteurs R1, R2 et R3 et l'on met en communication fluidique le réservoir E avec un des réacteurs ayant une pression plus faible que celle régnant dans l'évaporateur E. C'est normalement le réacteur R1 puisque c'est celui qui est refroidi depuis le plus longtemps.

Le mérite de la Demanderesse est d'avoir reproduit à chaque passage d'un réacteur à un autre les conditions de pression qui permettent d'obtenir un pic de production de froid au niveau du réservoir/évaporateur E. En faisant se succéder de tels pics, on parvient à baisser rapidement la température dans le réservoir E et par là-même dans le caisson C.

La Fig. 4 représente les variations de la pression dans les réacteurs R1, R2 et R3 et dans le réservoir E en fonction du temps. On constate au vu de la Fig. 4 que l'on peut utiliser en alternance des trois réacteurs tant pour obtenir l'abaissement de température jusqu'à la température cible désirée que pour ensuite le maintien de la température interne du caisson isotherme réfrigéré à cette température cible.

Pendant la phase de maintien en température, dès que la différence entre la température dans le caisson C et la température cible est égale à un troisième écart donné, on met en communication fluidique le réservoir E avec un des réacteurs et l'on continue à alterner la communication fluidique entre le réservoir E et chacun des réacteurs thermochimiques R1 à R3. En alternant le fonctionnement d'un réacteur à l'autre, on maintient la température dans le caisson sensiblement égale à la température cible.

### Deuxième mode de réalisation, utile pour comprendre l'invention :

### Installation comprenant trois réacteurs contenant chacun un mélange réactif différent des autres

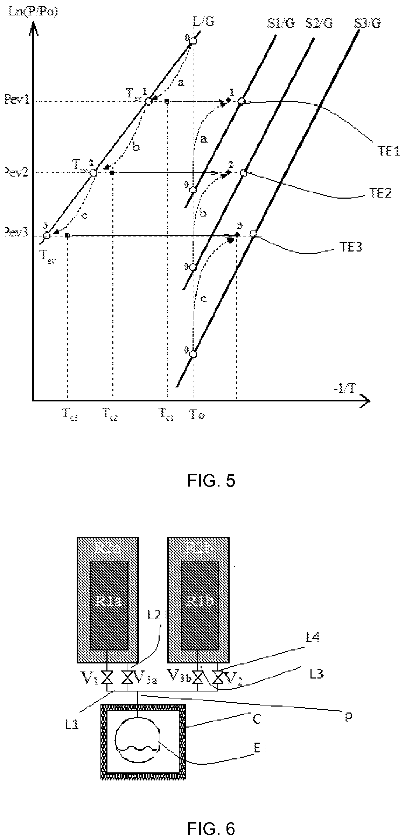

Dans ce deuxième mode de réalisation, l'installation comprend 3 réacteurs comprenant chacun un mélange réactif différent des autres. L'installation est la même que celle décrite en référence à la Fig. 1. La Fig. 5 représente le diagramme de Clapeyron de cette installation. Sur la Fig. 5, les droites S1/G, S2/G et S3/G représentent les droites d'équilibre pression/température pour chacun des systèmes réactionnels contenus respectivement dans les réacteurs R1, R2 et R3.

Le mode de mise en oeuvre du procédé est semblable à celui décrit en référence au premier mode de mise en oeuvre précédemment décrit. En utilisant des mélanges réactifs différents, on peut accélérer l'obtention de la température cible dans le caisson C et/ou obtenir une température cible plus basse.

Selon une variante de mise en oeuvre, le composé contenu dans le réacteur R3 dont la droite d'équilibre est la plus à droite sur la Fig. 5 est totalement consommé lors des phases a et b. Ce composé réagit avec le fluide en phase gaz pour produire un produit de réaction qui peut être dégradé lors de la réaction inverse à une température plus haute que les produits de réaction qui vont être générés dans les réacteurs R1 et R2. Un tel composé permet l'obtention rapide d'une température très basse dans le réservoir E et donc dans le caisson C.

Un tel mode de mise en oeuvre est avantageux quand les réacteurs R1 et R2 contiennent un même composé ou des composés différents mais qui permettent aussi le maintien de la température cible, en phase de maintien de la température dans le caisson isotherme réfrigéré. Le réacteur R3 contient, lui, un mélange réactif permettant d'accélérer la descente en température du réservoir E. Ceci permet d'atteindre la température cible plus rapidement mais au détriment d'une régénération ultérieure du réacteur R3 plus coûteuse en énergie. Le réacteur R3 n'est plus utilisé lors du maintien en température du caisson C ; seuls les réacteurs R1 et R2 sont donc utilisés en alternance pour le maintien de la température dans le caisson C, comme expliqué en référence au premier mode de réalisation.

### Troisème mode de réalisation, représentant un mode de réalisation selon l'invention :

### Installation comprenant des réacteurs connectés thermiquement

Le troisième mode de réalisation de l'installation de l'invention est représenté sur la Fig. 6. Les éléments communs aux deux modes de réalisation précités sont référencés à l'identique. Selon ce troisième mode de réalisation, l'installation comporte quatre réacteurs, R1a, R1b, R2a et R2b qui sont connectés thermiquement deux-à-deux. Dans le cas présent, le réacteur R1a est contenu dans le réacteur R2a, les deux réacteurs sont concentriques et peuvent échanger de la chaleur par conduction. De même, le réacteur R1b est contenu dans le réacteur R2b. Une vanne V1 montée sur la ligne L1 permet de mettre en communication le réservoir E avec le réacteur interne R1a tandis que la vanne V3a montée sur la ligne L2 permet de mettre en communication fluidique le réacteur externe R2a avec le réservoir E. La vanne V2 montée sur la ligne L4 permet de mettre en communication fluidique le réacteur externe R2b avec le réservoir E tandis que la vanne V3b montée sur la ligne L3 permet de mettre en communication fluidique le réservoir E avec le réacteur interne R1b.

Selon une variante de réalisation non représentée, les réacteurs comportent chacun une pluralité de plaques creuses contenant un composé réactif. En intercalant les plaques de deux réacteurs, on permet un transfert de chaleur du mélange réactif de l'un vers le mélange réactif de l'autre et vice-versa.

Dans ce troisème mode de réalisation, les deux réacteurs internes R1a et R2a contiennent un même mélange réactif S1 et les deux réacteurs externes R1b et R2b contiennent un même mélange réactif S2, différent de celui des réacteurs internes précités.

Le jeu de réacteurs contient la masse de réactif nécessaire également à la phase de maintien en température du caisson C.

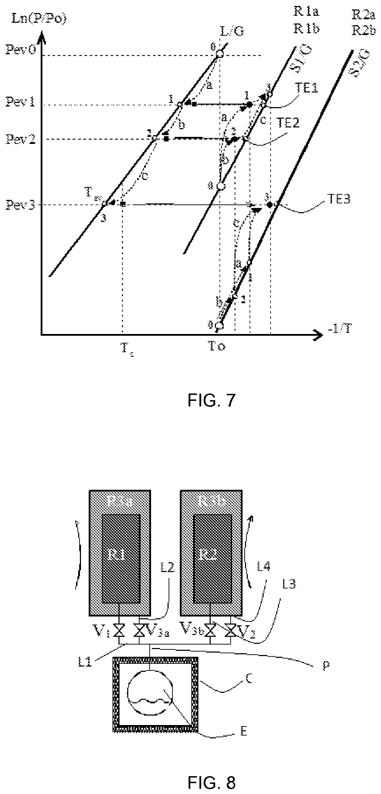

La Fig. 7 représente le diagramme de Clapeyron de l'installation et montre le fonctionnement de ce troisème mode de réalisation. Les deux réacteurs externes permettent également la phase de maintien en température du caisson C. Chaque réacteur interne R1a et R1b est dimensionné de manière à réagir complètement ou partiellement grâce au transfert de sa chaleur de réaction vers le réacteur externe le contenant (respectivement *R2a et R2b).* Lorsque ce dernier entre dans sa phase de fonctionnement, sa chaleur de réaction sera d'une part évacuée par ventilation au moyen des groupes de ventilateurs VT1 et/ou VT2 (non représentés sur la Fig. 6) et d'autre part accumulée dans le réacteur interne qu'il contient. Cette configuration utilisant un réacteur imbriqué dans l'autre permet ainsi de valoriser le réactif non actif puisqu'il agit comme une capacité thermique absorbant la chaleur dégagée par l'autre réacteur en fonctionnement (stockage de chaleur sensible).

La droite S1/G représente la corrélation température/pression pour les réacteurs R1a et R1b. La droite S2/G représente l'équilibre température pression pour les réacteurs R2a et R2b. La droite L/G représente la corrélation entre la pression et la température à l'équilibre dans le réservoir E.

### Phase a :

La vanne V1 est ouverte. Le mélange réactif S1 contenu dans le réacteur R1a réagit. La température du réacteur R1a augmente. La chaleur qu'il dégage est absorbée par le réacteur le contenant *R2a.* La pression dans l'ensemble réservoir E-réacteur R1a se stabilise rapidement à la valeur Pev1. Dès que la différence entre la température du réacteur externe R2a et la température d'équilibre du sel S1 au point d'équilibre TE1 est inférieure à un premier écart donné, on ferme la vanne V1. On estime que la température du réacteur interne R1a est la même que celle du réacteur externe R2a.

### Phase b :

On ouvre la vanne V2. Le sel S1 du réacteur R1b réagit ce qui fait monter la température du réacteur R1b et celle du réacteur R2b le contenant. La pression dans l'ensemble réservoir-réacteur R1b s'équilibre à la valeur Pev2. Dès que différence entre la température des deux réacteurs R1b et R2b et la température d'équilibre correspondant au point d'équilibre TE2 est inférieure à deuxième écart donné, on ferme la vanne V2. Cette température d'équilibre est la température qui correspond au point d'équilibre TE2 pour le sel S1 à la pression Pev1 qui est celle de du réservoir E, dans le diagramme de Clausius-Clapeyron.

### Phase c :

Les vannes V3a et V3b sont ouvertes soit simultanément, soit l'une après l'autre si la différence de température entre *R2a* et *R2b* excède un quatrième écart donné. Il faut en effet attendre que le réacteur le plus chaud se soit suffisamment refroidi avant de le mettre en communication avec le réservoir E afin d'éviter une remontée de la pression dans le réservoir E et donc une baisse de la puissance frigorifique. On considère maintenant les réacteurs R2a et R2b et leur droite d'équilibre S2/G. Le même raisonnement est applicable à ces deux réacteurs et les mêmes phénomènes que précités sont mis en oeuvre.

### Phases suivantes :

Le séquençage des réacteurs peut se poursuivre si leurs températures et pressions permettent une nouvelle augmentation de la puissance de froid et ce jusqu'à l'obtention de la température cible. Le maintien de la température du caisson à la valeur cible est ensuite mis en oeuvre en mettant alternativement en communication fluidique le réservoir E avec les réacteurs externes R2 et R2b. Les réacteurs internes ne sont plus utilisés pour le maintien en température.

### Quatrième mode de réalisation et de mise en œuvre, représentant un mode de réalisation selon l'invention :

Ce quatrième mode de réalisation est représenté de manière schématique sur la Fig. 8. Les éléments en commun avec le troisième mode de réalisation sont référencés à l'identique. Ce quatrième mode de réalisation diffère du troisième mode de réalisation en ce que les réacteurs internes R1 et R2 contiennent des mélanges réactifs (sels) différents. Le réacteur R1 est interne au réacteur R3a et le réacteur R2 est interne au réacteur R3b. Les réacteurs R1 et R2 contiennent des mélanges réactifs S1 et S2 différents. Les réacteurs R3a et R3b contiennent le même mélange réactif S3.

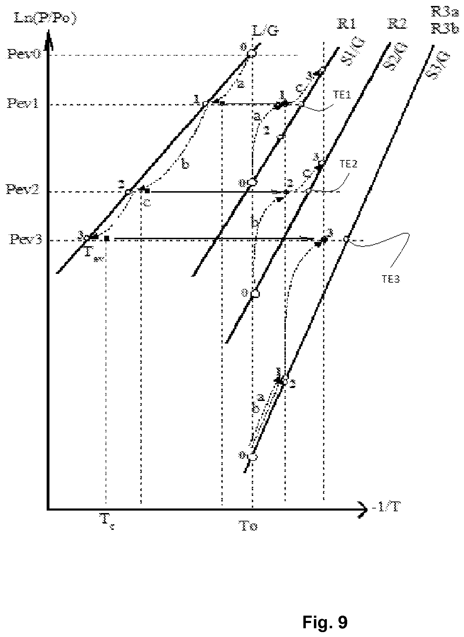

La Fig. 9 représente le diagramme de Clausius-Clapeyron de l'installation. Le fonctionnement de l'invention va être décrit en référence aux Fig. 8 et 9.

### Phase a :

La vanne *V1* est ouverte. Le réservoir E et le réacteur *R1* sont mis en communication. Ce dernier réagit et fait monter sa température et celle du réacteur *R3a.* Ensuite, dès que la température du réacteur R1 devient proche (premier écart de température) de la température correspondant au point d'équilibre TE1 correspondant à la pression Pev1 dans le réservoir, V1 est fermée.

### Phase b :

*La vanne V2 est* ouverte. Le réacteur *R2* réagit et donc sa température augmente ce qui augmente la température du réacteur *R3b* le contenant. Dès que l'écart entre la température des deux réacteurs et la température d'équilibre correspondant au point d'équilibre TE2 à la pression à l'évaporateur Pev2 est inférieur à un deuxième écart donné, la vanne *V2* est fermée.

### Phase c :

Ensuite, les vannes *V3a* et *V3b* sont ouvertes simultanément ou l'une après l'autre, selon que les températures des deux réacteurs *R3a* et *R3b* sont semblables ou non. Ces deux réacteurs R3a et R3b assureront la descente de la température Tc du caisson jusqu'à la température cible avec les deux réacteurs internes, puis le maintien de cette température. Les deux autres réacteurs internes ne sont pas utilisés pour le maintien en température du caisson.

Les écarts précités dans toute la description sont déterminés expérimentalement et dépendent de l'installation. L'Homme du Métier est à même de les déterminer expérimentalement.

### Cinquième mode de réalisation et cinquième mode de mise en œuvre du procédé, représentant un mode de réalisation selon l'invention :

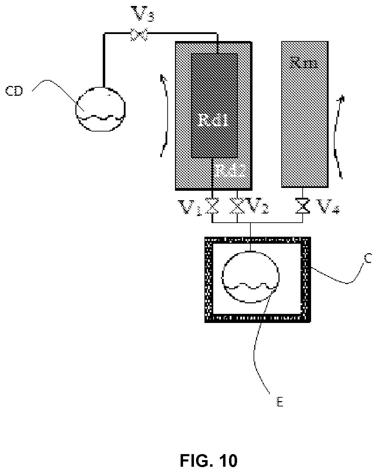

La Figure 10 représente de manière schématique un cinquième mode de réalisation de l'installation selon l'invention. Les éléments en commun avec les modes de réalisation déjà décrits sont référencés à l'identique. Le réacteur interne Rd1 contient un sel S1. Le réacteur extérieur Rd2 contient un autre sel S2. Selon ce cinquième mode de réalisation, l'installation comporte un réacteur Rm connecté à l'évaporateur E par une ligne équippée d'une vanne V4. L'installation_comporte également un condenseur CD connecté fluidiquement au réacteur interne Rd1 via une conduite équippée d'une vanne V3. Les vannes V1 et V2 permettent la mise en connexion fluidique de l'évaporateur E avec respectivement les réacteurs Rd1 et Rd2.

L'ensemble de réacteurs est dimensionné de manière à ce que le réacteur interne *Rd1* puisse réagir complètement ou partiellement grâce au transfert de sa chaleur de réaction vers le réacteur le contenant *Rd2.* Lorsque ce dernier entrera dans sa phase de fonctionnement, sa chaleur de réaction sera en grande partie transmise vers *Rd1.* Dès que la température sera suffisante, le sel *Rd1* entrera en régénération. Cette réaction de décomposition, du sel S1, absorbe une grande quantité d'énergie qui est du même ordre de grandeur que celle libérée par la réaction chimique exothermique entre le fluide en phase gaz et le sel S2, dans le réacteur Rd2. Cette configuration utilisant un réacteur imbriqué devient très intéressante dès lors que les sels S1 et S2 sont choisis de manière à permettre la décomposition du sel S1. Le réacteur Rd1 est doublement valorisé. D'abord, il assure une première phase de descente en température et pression de l'évaporateur. Ensuite, il absorbe une grande partie de la chaleur dégagée par le réacteur Rd2 et maintien sa température constante.

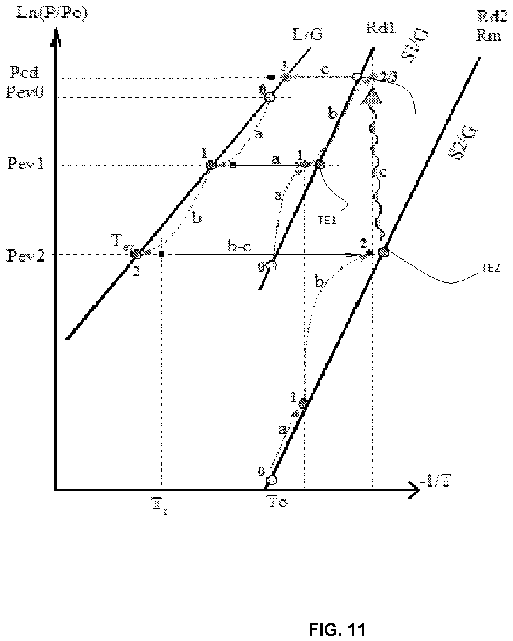

Le fonctionnement de ce cinquième mode de réalisation va être expliqué en référence aux Fig. 10 et 11.

### Phase a :

La vanne *V1* est ouverte. Le réacteur *Rd1* réagit et sa température augmente donc ainsi que celle du réacteur le contenant *Rd2 du fait du transfert thermique entre les deux réacteurs imbriqués.* Une première pression dans l'ensemble s'établit à la pression Pev1. Dès que le réacteur Rd1 n'arrive plus à assurer une forte cinétique d'évaporation au niveau de l'évaporateur, on ferme V1.

### Phase b :

La vanne *V2* est ouverte. Le réacteur *Rd2* réagit. Sa température augmente et entraine celle du réacteur qu'il contient *Rd1,* en suivant la température d'équilibre donné par le diagramme de Clausius-Clapeyron (droite Rd2). La pression entre l'évaporateur E et le réacteur Rd2 s'établit à la pression Pev2.

### Phase c :

La chaleur de réaction de Rd2 continue à être absorbée par le réacteur Rd1. L'augmentation de la température dans Rd1 entraine une augmentation de la pression dans Rd1. La vanne (ou clapet) V3 est ouverte, dès que la pression est suffisante pour pouvoir condenser dans les conditions de température ambiantes du condenseur CD, le fluide frigorigène gazeux, décomposé dans Rd1. Le fluide frigorigène régénéré sous forme de gaz va se condenser dans le condenseur CD. L'enthalpie de réaction du sel S2 et celle du sel S1 sont du même ordre de grandeur. La chaleur produite dans Rd2 est donc majoritairement absorbée par la régénération de Rd1. Ainsi, La température de Rd2 est stabilisée à la température correspondante à la température de régénération de Rd1. Par un choix judicieux des sels S1 et S2, un bon écart à l'équilibre TE2 de S2 est maintenu et la cinétique de réaction se maintient élevée. La puissance frigorifique à l'évaporateur E reste importante pendant un laps de temps plus grand.

### Phase de maintien en température

Lorsque la phase de descente en température du caisson est terminée, on ferme V3. Selon si Rd2 a été dimensionné pour assurer la phase de maintien en température, V2 reste ouverte. Dans le cas contraire, on ferme V2 et la vanne V4 est ouverte ; c'est le réacteur Rm qui assure ainsi le maintien en température du caisson C.

### Sixième mode de réalisation et sixième mode de mise en œuvre, représentant un mode de réalisation selon l'invention :

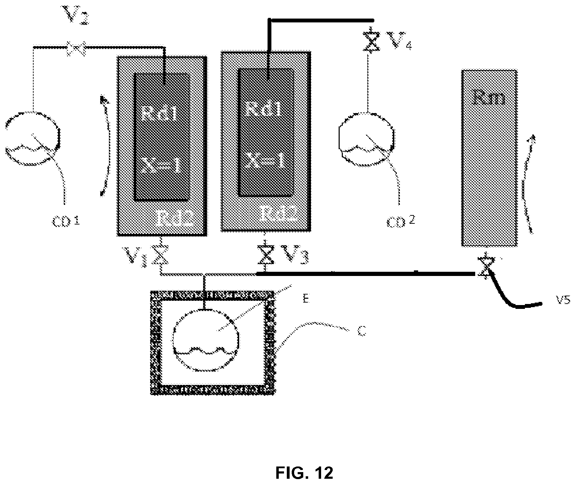

La Fig. 12 représente un sixième mode de réalisation de l'installation de l'invention. Les éléments en commun avec le cinquième mode de réalisation précité sont référencés à l'identique. Selon ce mode de réalisation, l'installation comporte un évaporateur E logé dans le caisson isotherme C (caisson thermiquement isolant). L'évaporateur E est également connecté fluidiquement avec deux réacteur Rd2 qui contiennent chacun un réacteur Rd1 (réacteurs en connexion thermique). La vanne V1 permet de couper ou de mettre en communication fluidique l'évaporateur E et le premier réacteur externe Rd2. Les réacteurs internes Rd1 sont en communication fluidique chacun avec un condenseur CD1 et CD 2 mais pas avec l'évaporateur E. La vanne V2 permet de couper ou de mettre en communication fluidique le condenseur CD1 avec le premier réacteur interne Rd1. La vanne V3 permet d'isoler ou de mettre en communication fluidique l'évaporateur E avec le deuxième réacteur externe Rd2. La vanne V4 permet d'isoler ou de mettre en communication fluidique le second condenseur CD 2 avec le second réacteur interne Rd1. La vanne V5 permet de mettre en communication ou d'isoler l'évaporateur E et le réacteur externe Rm.

L'ensemble de réacteurs est dimensionné de manière à ce que les réacteurs internes *Rd1* puissent absorber la chaleur de réaction des réacteurs les contenant *Rd2.* Dans un premier temps, la chaleur de réaction est absorbée sous forme sensible et permet de chauffer à l'équilibre le réacteur Rd1 qui monte en pression. Ensuite, dès que les conditions de température et pression le permettent, le produit de réaction obtenu par la réaction entre le composé réactif S1 et le fluide en phase gaz provenant de l'évaporateur E et contenu dans Rd1 entre en décomposition. Le fluide frigorigène gazeux se condense dans les condenseur CD1 et CD2 et les réacteurs Rd1 se régénèrent. Cette réaction de décomposition du produit de réaction du composé réactif S1 avec le fluide frigorigène absorbe une grande quantité d'énergie, laquelle est du même ordre de grandeur que celle libérée par la réaction chimique de synthèse entre le composé réactif S2 du réacteur Rd2 et le fluide frigorigène gazeux provenant de l'évaporateur E. Cette configuration devient très intéressante dès lors que le dimensionnement et le choix des mélanges réactifs S1 et S2 permet une synthèse complète de Rd2 par la décomposition complète du produit de réaction obtenu par réaction entre le composé réactif S1 et le fluide frigorigène gazeux provenant de l'évaporateur.

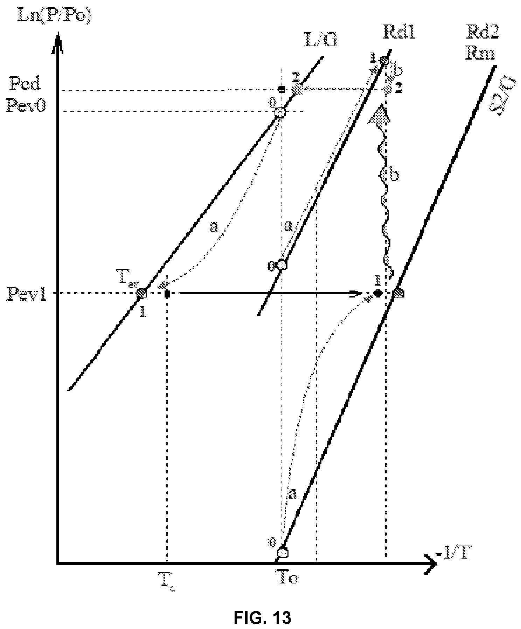

Le fonctionnement de ce sixième mode de réalisation va être décrit en référence aux Fig. 12 et 13.

Dans un premier temps on utilise en alternance les réacteurs externe Rd2 pour les phases a) et b) exposées en référence au cinquième mode de mise en oeuvre.

Le réacteur interne RD1 du réacteur externe RD2 en communication avec l'évaporateur E voit sa température et sa pression augmenter, en suivant sa droite équilibre référencée Rd1 sur le diagramme de Clapeyron de la Fig. 13. La pression entre l'évaporateur E et le réacteur Rd2 s'établit à la pression Pev1.

La chaleur de réaction de Rd2 continue à être absorbée par le réacteur Rd1. L'augmentation de la température entraine une augmentation de la pression dans Rd1. La vanne (ou clapet) V2 ou V4 est ouverte, dès que la pression est suffisante pour pouvoir condenser à la température du condenseur CD1 ou CD 2, le fluide frigorigène gazeux, décomposé dans Rd1. Le fluide frigorigène régénéré sous forme gazeuse se condense alors dans le condenseur CD1 ou CD 2. L'enthalpie de réaction du composé réactif S2 et celle du composé réactif S1 étant du même ordre de grandeur, la chaleur produite dans Rd2 est majoritairement absorbée par la régénération de Rd1. Ainsi, La température de Rd2 est stabilisée à la température correspondante à la température de régénération de Rd1. Par un choix judicieux des mélanges réactifs S1 et S2, à l'équilibre réactionnel dans le réacteur Rd2, un écart important de pression entre l'évaporateur E et le réacteur Rd2 est ainsi maintenu ; la cinétique de réaction se maintient à une valeur élevée et la puissance frigorifique à l'évaporateur E reste donc importante pour chacun des réacteurs externes Rd2.

### Phase de maintien en température

Lorsque la phase de descente en température du caisson C est terminée, V2 est fermée. Si les réacteurs Rd2 ont été dimensionnés pour assurer cette phase, on les utilise pour assurer le maintien en température. Dans le cas contraire, c'est le réacteur Rm qui assure le maintien en température du caisson C.

## Revendications

1. Procédé de réfrigération d'un caisson thermiquement isolant (C) sensiblement jusqu'à une température cible Tc selon lequel :
- on place un évaporateur (E) dans ledit caisson (C), ledit évaporateur (E) contenant un fluide en phase liquide en équilibre avec sa phase vapeur ;
- on met en communication fluidique ledit évaporateur (E) avec au moins un réacteur thermochimique Ri comprenant un mélange comprenant au moins un composé réactif Si apte à réagir chimiquement avec ledit fluide en phase gaz pour former un produit de réaction, ladite réaction chimique de synthèse dudit produit de réaction étant exothermique et réversible
- simultanément, on évacue tout ou partie de la chaleur produite au niveau dudit réacteur Ri ;
- on fournit n autres réacteurs thermochimiques contenant chacun un mélange contenant au moins un composé réactif éventuellement identique audit mélange réactif Si, n étant un entier égal ou supérieur à 1 ;
- éventuellement, on fournit un ensemble d'au moins un réacteur thermochimique externe (Rm) distinct dudit ensemble de n réacteurs et distinct dudit réacteur Ri ;
où, selon le procédé,
I) on détermine la pression Pevi régnant dans l'ensemble formé par ledit évaporateur (E) mis en communication fluidique avec le(s)dit(s) réacteur(s) thermochimique(s) Ri et/ou la température dudit/desdites réacteur(s) thermochimique(s) Ri mis en communication fluidique avec ledit évaporateur (E) ;
II) lorsque la différence de température DTRi entre la température dudit/desdits réacteurs Ri connecté(s) audit évaporateur (E) et la température d'équilibre TeSi dudit/desdits mélange(s) réactif(s) Si contenu(s) dans ledit/lesdits réacteur(s) thermochimique(s) Ri à la pression Pevi, est égale à un premier écart donné (ΔT1) et/ou lorsque la différence de température DTev entre ledit évaporateur (E) et l'intérieur dudit caisson (C) est égale à un deuxième écart donné (ΔT2), on isole ledit/lesdits réacteur(s) Ri dudit évaporateur (E) et l'on met en communication fluidique ledit évaporateur (E) avec au moins un réacteur thermochimique Ri+1 choisi parmi les n autres réacteurs thermochimiques non connectés audit évaporateur (E) et dont la pression est inférieure Pevi et/ou la température est inférieure à une valeur donnée, simultanément, on évacue également tout ou partie de la chaleur produite au niveau dudit ou desdits réacteurs Ri+1 connectés audit évaporateur (E),
III) on répète les étapes I et II en référence au(x)dit(s) réacteur(s) thermochimique(s) Ri+1 en communication fluidique avec ledit évaporateur (E) jusqu'à que l'écart entre ladite température Tc dans ledit caisson (C) et ladite température cible Tc soit égal à un troisième écart ΔT3 et,
- éventuellement on maintient l'écart entre ladite température Tc dans ledit caisson (C) et ladite température cible Tc inférieure ou égal audit troisième écart ΔT3 soit en réitérant les étapes I et II en mettant ledit évaporateur (E) en communication fluidique avec au moins un des n+1 réacteurs thermochimiques de ladite installation pour maintenir la température dans ledit caisson (C) sensiblement égale à ladite température cible Tc, soit en mettant ledit évaporateur (E) en communication fluidique avec ledit ensemble d'au moins un réacteur thermochimique externe (Rm) distinct dudit ensemble de n réacteurs et distinct dudit réacteur Ri ;
et où on connecte thermiquement entre eux une partie desdits n+1 réacteurs thermochimiques, en ce que l'on met en communication fluidique une partie desdits réacteurs thermiquement connectés avec ledit évaporateur (E), l'autre partie étant isolée dudit évaporateur (E) et en ce que l'on évacue au moins partiellement par conduction la chaleur dégagée par la réaction exothermique de synthèse dans lesdits réacteurs en communication fluidique avec ledit évaporateur (E) vers lesdits réacteurs isolés dudit évaporateur (E).

2. Procédé selon la revendication 1 , où l'on connecte thermiquement deux-à-deux lesdits réacteurs thermochimiques thermiquement connectés.

3. Procédé selon la revendication 2, où lesdits réacteurs connectés thermiquement forment des paires de réacteurs thermochimiques, en ce que l'on met ledit deuxième réacteur thermochimique de chacune desdites paires en communication fluidique avec au moins un condenseur (CD), ledit deuxième réacteur thermochimique contenant une quantité de produit de réaction obtenu lors de ladite réaction chimique de synthèse et éventuellement un mélange contenant un composé réactif Si n'ayant pas encore réagit, où l'on met en oeuvre ladite étape 1 en utilisant lesdits premiers réacteurs thermochimiques puis ladite étape II en utilisant lesdits deuxièmes réacteurs thermochimiques ou où l'on met en oeuvre lesdites étapes I et II en utilisant lesdits premiers réacteurs thermochimiques et en ce que l'on évacue, notamment, par conduction, toute la chaleur dégagée lors de la réaction de synthèse dans lesdits premiers réacteurs vers lesdits deuxièmes réacteurs pour décomposer ledit produit de réaction contenu dans lesdits deuxièmes réacteurs et condenser, dans ledit condenseur (CD), ledit fluide en phase vapeur qui a été régénéré dans lesdits deuxièmes réacteurs, la condensation ayant notamment lieu à la température dudit condenseur (CD), laquelle peut être la température extérieure audit caisson (C).

4. Installation de réfrigération d'un caisson thermiquement isolant (C) sensiblement jusqu'à une température cible Tc, apte à permettre la mise en oeuvre du procédé selon l'une quelconque des revendications 1 à 3, du type comprenant :
- un caisson thermiquement isolant (C) ;
- un évaporateur (E) disposé dans ledit caisson (C) et contenant un fluide en phase liquide en équilibre avec sa phase gaz ;
- au moins un réacteur thermochimique Ri contenant un mélange réactif Si apte à réagir chimiquement avec ledit fluide en phase gaz pour former un produit de réaction, ladite réaction chimique de synthèse dudit produit de réaction étant exothermique et réversible, ledit réacteur thermochimique Ri étant apte à être mis en communication fluidique avec ledit évaporateur (E) via une conduite Li équipée de moyens formant vanne (Vi) ;
- des moyens d'évacuation de la chaleur (VT1 ; VT2, Rd1 ; Rd2) ;
- des moyens de mesure de la température dans ledit caisson thermiquement isolant (C) ;
- des moyens de chauffage dudit ou desdits réacteurs thermochimiques Ri qui sont aptes à induire la réaction endothermique inverse de décomposition dudit produit de réaction aboutissant à la régénération dudit mélange réactif et dudit fluide en phase gaz ;
- en outre, au moins n réacteurs thermochimiques Ri+1 , n étant un entier supérieur ou égal à 1 , chaque réacteur Ri+1 contenant un mélange réactif Si+1 , éventuellement identique audit mélange réactif Si et également apte à réagir chimiquement avec ledit fluide en phase gaz pour former un produit de réaction, ladite réaction chimique de synthèse dudit produit de réaction étant exothermique et réversible, chacun desdits n réacteurs thermochimiques étant apte à être mis en communication fluidique avec ledit évaporateur (E) via une conduite spécifique Li+1 ;
- une vanne Vi+1 montée sur chacune desdites Li+1 conduites et qui en position ouverte permet la connexion fluidique entre ledit réacteur et ledit évaporateur (E) et, en position fermée, isole ledit réacteur Ri dudit évaporateur (E) et desdits autres n réacteurs thermochimiques
- des moyens de chauffage de chacun desdits réacteurs thermochimiques Ri+1 qui sont aptes à induire la réaction endothermique inverse de décomposition dudit produit de réaction aboutissant à la régénération dudit mélange réactif et dudit fluide en phase gaz ; et
- des moyens d'évacuation de la chaleur adaptés pour évacuer la chaleur générée par ladite réaction de synthèse de chacun desdits réacteurs thermochimiques Ri et Ri+1 dans laquelle elle a lieu ;
où l'installation comporte
- des moyens de comparaison de la différence entre la température mesurée dans ledit caisson (C) et ladite température cible Tc avec un troisième écart donné (ΔT3) ; et/ou
- des moyens de détermination de la température Tev dans ledit évaporateur (E) et/ou de la pression Pev dans ledit évaporateur (E) ou dans chacun desdits réacteurs Ri et Ri+1 ;
- des moyens de détermination de la température Ti dans ledit réacteur Ri et dans chaque réacteur thermochimique Ri+1 desdits n+1 réacteurs ;
- des moyens de détermination de l'écart DTev entre la température dudit caisson (C) et la température dudit évaporateur (E) ; et/ou
- des moyens de détermination de l'écart DTRi entre ladite température Ti déterminée et la température d'équilibre TeSi dudit mélange réactif Si contenu dans ledit réacteur thermochimique Ri considéré à ladite pression Pevi déterminée dans ledit évaporateur (E) ; et/ou
- des moyens de comparaison de DTRi et/ou DTev respectivement avec un premier et un deuxième écart donné (ΔT1 ; ΔT2) et ;
- des moyens de contrôle de la position ouverte/fermée de chacune desdites vannes Vi et Vi+1, lesdits moyens de contrôle étant couplés audits moyens de comparaison et conformés pour mettre en communication fluidique ledit évaporateur (E) avec au moins un réacteur thermochimique Ri+1 choisi parmi les réacteurs thermochimiques qui ne sont pas en communication fluidique avec ledit évaporateur (E) et dont la pression est inférieure à la pression Pevi déterminée dans ledit évaporateur (E) et/ou la température est inférieure à une valeur donnée, lorsque lesdits moyens de comparaison ont déterminé que DTRi et/ou DTev est/sont inférieurs respectivement audit premier et audit deuxième écart (ΔT1 ; ΔT2) ;
- éventuellement un ensemble d'au moins un réacteur thermochimique externe distinct dudit ensemble de n réacteurs et distinct dudit réacteur Ri et apte à être mis en communication fluidique avec ledit évaporateur (E) via au moins d'une conduite équipée de moyens formant vanne ;
et où, dans l'installation, lesdits moyens de contrôle sont couplés aux moyens de comparaison, et où lesdits moyens de contrôle sont configurés pour mettre en connexion fluidique ledit évaporateur (E) avec au moins une partie desdits n réacteurs, lorsque l'écart entre la température dans ledit caisson et ladite température cible Tc est égal audit troisième écart ΔT3 ou pour mettre en connexion fluidique l'évaporateur (E) avec ledit d'ensemble d'au moins réacteur thermochimique externe, lorsque l'écart entre la température dans ledit caisson et le température cible est égal audit troisième écart ΔT3.
et où au moins une partie desdits n+1 réacteurs sont connectés thermiquement de manière à ce que lorsqu'une partie desdits réacteurs thermiquement connectés est en communication fluidique avec ledit évaporateur (E) du fait de l'ouverture desdits moyens formant vanne (Vi), la partie restante desdits réacteurs thermiquement connectés est isolée dudit évaporateur (E), et en ce que ladite partie isolée est conformée pour permettre d'évacuer par conduction la chaleur dégagée par ladite de réaction de synthèse dans lesdits réacteurs en communication fluidique avec ledit évaporateur (E) et également de stocker ladite chaleur évacuée sous forme sensible, du fait de la capacité calorifique massique du produit de réaction et/ou du mélange réactif et/ou sous forme latente, du fait de la décomposition dudit produit de réaction.

5. Installation selon la revendication 4, où lesdits moyens d'évacuation de la chaleur permettent d'évacuer la chaleur par convexion forcée et notamment comportent au moins un ventilateur et/ou en ce que lesdits moyens d'évacuation de chaleur sont aptes à évacuer la chaleur par conduction et permettent éventuellement le stockage de la chaleur évacuée sous forme sensible, par stockage dans un matériau et/ou sous forme latente, du fait d'un changement d'état physique et/ou d'une réaction chimique du matériau dans lequel la chaleur est évacuée.

6. Installation selon la revendication 4 ou 5, où une partie desdits réacteurs thermiquement connectés sont contenus les uns dans les autres et notamment imbriqués l'un dans l'autre, deux-à-deux, de manière à permettre une connexion thermique notamment par conduction en formant des paires de réacteurs thermochimiques thermiquement connectés.

7. Installation selon la revendication 4 ou 6, où au moins une partie desdits réacteurs thermiquement connectés comportent des plaques creuses qui referment ledit mélange réactif et où les plaques de deux réacteurs sont intercalées les unes avec les autres de manière à connecter thermiquement par conduction et/ou convection lesdits réacteurs thermochimiques.

8. Installation selon l'une quelconque des revendications 6 ou 7, où lesdits premiers réacteurs de chacune desdites paires de réacteurs thermochimiques thermiquement connectés sont chacun reliés audit évaporateur (E) par une conduite spécifique à chacun desdits réacteurs et équipée de moyens formant vanne, où elle comporte, en outre, au moins un condenseur (CD) qui est relié à chacun desdits deuxièmes réacteurs par une conduite équipée de moyens formant vanne, où, éventuellement, lesdits deuxièmes réacteurs thermochimiques sont également chacun reliés audit évaporateur (E) par une conduite spécifique à chaque réacteur et équipée de moyens formant vanne et en ce que lesdits moyens de contrôle sont couplés audits moyens de comparaison et sont conformés pour mettre en communication fluidique ledit évaporateur (E), soit avec une partie desdits premiers réacteurs qui n'étaient pas connectés audit évaporateur (E), soit avec lesdits deuxièmes réacteurs, lorsque ces derniers peuvent être reliés audit évaporateur (E), lorsque lesdits moyens de comparaison ont déterminé que DTRi et/ou DTev est/sont inférieurs respectivement audit premier et audit deuxième écart (ΔT1 ; ΔT2).

9. Installation selon l'une quelconque des revendications précédentes, où chaque réacteur thermochimique Ri comporte une paroi qui définit une enveloppe qui renferme ledit mélange réactif et où lesdits moyens de détermination de la température de chaque réacteur thermochimique Ri comportent des moyens de mesure de la température de la paroi de chaque réacteur Ri.

## Patentansprüche

1. Verfahren zum Kühlen eines thermisch isolierenden Gehäuses (C) im Wesentlichen bis zu einer Zieltemperatur Tc, wobei:
- ein Verdampfer (E) in dem Gehäuse (C) platziert wird, wobei der Verdampfer (E) ein Fluid in Flüssigphase im Gleichgewicht mit seiner Dampfphase enthält;
- der Verdampfer (E) in Fluidkommunikation mit mindestens einem thermochemischen Reaktor Ri gebracht wird, umfassend eine Mischung, umfassend mindestens eine reaktive Verbindung Si, die geeignet ist, um mit dem Fluid in Gasphase zum Ausbilden eines Reaktionsprodukts chemisch zu reagieren, wobei die chemische Synthesereaktion des Reaktionsprodukts exotherm und reversibel ist
- gleichzeitig die gesamte oder ein Teil der Wärme abgeführt wird, die in dem Reaktor Ri erzeugt wird;
- n andere thermochemische Reaktoren bereitgestellt werden, die jeweils eine Mischung enthalten, die mindestens eine reaktive Verbindung enthält, die optional mit der reaktiven Mischung Si identisch ist, wobei n eine ganze Zahl gleich oder größer als 1 ist;
- optional eine Anordnung von mindestens einem externen thermochemischen Reaktor (Rm) bereitgestellt wird, die von der Anordnung von n Reaktoren verschieden und von dem Reaktor Ri verschieden ist;
wobei, gemäß dem Verfahren,
I) der Druck Pevi, der in der Anordnung vorherrscht, der durch den Verdampfer (E) ausgebildet wird, der in Fluidkommunikation mit dem/den thermochemischen Reaktor(en) Ri gebracht wird, und/oder die Temperatur des/der Reaktors/Reaktoren des/der thermochemischen Reaktors/Reaktoren Ri bestimmt wird, der/die in Fluidkommunikation mit dem Verdampfer (E) gebracht wird/werden;
II) wenn die Temperaturdifferenz DTRi zwischen der Temperatur des/der Reaktors/Reaktoren Ri, der/die mit dem Verdampfer (E) verbunden ist/sind, und der Gleichgewichtstemperatur TeSi der reaktiven Mischung(en) Si, die in dem/den thermochemischen Reaktor(en) Ri bei dem Druck Pevi enthalten ist/sind, gleich einer gegebenen ersten Abweichung (ΔT1) ist, und/oder wenn die Temperaturdifferenz DTev zwischen dem Verdampfer (E) und dem Inneren des Gehäuses (C) gleich einer gegebenen zweiten Abweichung (ΔT2) ist, der/die Reaktor(en) Ri von dem Verdampfer (E) isoliert wird/werden und der Verdampfer (E) in Fluidkommunikation mit mindestens einem thermochemischen Reaktor Ri+1 gebracht wird, der aus den n anderen thermochemischen Reaktoren ausgewählt ist, die nicht mit dem Verdampfer (E) verbunden sind und dessen Druck niedriger als Pevi ist und/oder dessen Temperatur niedriger als ein gegebener Wert ist, gleichzeitig ebenso die gesamte oder ein Teil der Wärme abgeführt wird, die an dem oder den Reaktor(en) Ri+1 erzeugt wird, der/die mit dem Verdampfer (E) verbunden ist/sind,
III) die Schritte I und II in Bezug auf den/die thermochemischen Reaktor(en) Ri+1 in Fluidkommunikation mit dem Verdampfer (E) noch einmal gemacht werden, bis die Abweichung zwischen der Temperatur Tc in dem Gehäuse (C) und der Zieltemperatur Tc gleich einer dritten Abweichung ΔT3 ist, und
- optional die Abweichung zwischen der Temperatur Tc in dem Gehäuse (C) und der Zieltemperatur Tc kleiner als oder gleich der dritten Abweichung ΔT3 gehalten wird, entweder durch Wiederholen der Schritte I und II, wobei der Verdampfer (E) zum Halten der Temperatur in dem Gehäuse (C) im Wesentlichen gleich der Zieltemperatur Tc in Fluidkommunikation mit mindestens einem der n+1 thermochemischen Reaktoren der Anlage gebracht wird, oder durch Bringen des Verdampfers (E) in Fluidkommunikation mit der Anordnung von mindestens einem externen thermochemischen Reaktor (Rm), die von der Anordnung von n Reaktoren verschieden und von dem Reaktor Ri verschieden ist; und wobei ein Teil der n+1 thermochemischen Reaktoren miteinander thermisch verbunden wird, dadurch, dass ein Teil der thermisch verbundenen Reaktoren in Fluidkommunikation mit dem Verdampfer (E) gebracht wird, wobei der andere Teil von dem Verdampfer (E) isoliert ist, und dadurch, dass die Wärme, die durch die exotherme Synthesereaktion in den Reaktoren in Fluidkommunikation mit dem Verdampfer (E) abgegeben wird, mindestens teilweise durch Leitung zu den Reaktoren abgeführt wird, die von dem Verdampfer (E) isoliert sind.

2. Verfahren nach Anspruch 1, wobei die thermisch verbundenen thermochemischen Reaktoren paarweise thermisch verbunden werden.

3. Verfahren nach Anspruch 2, wobei die thermisch verbundenen Reaktoren Paare von thermochemischen Reaktoren ausbilden, dadurch, dass der zweite thermochemische Reaktor jedes der Paare in Fluidkommunikation mit mindestens einem Kondensator (CD) gebracht wird, wobei der zweite thermochemische Reaktor eine Menge an Reaktionsprodukt, das während der chemischen Synthesereaktion erhalten wird, und optional eine Mischung enthält, die eine reaktive Verbindung Si enthält, die noch nicht reagiert hat, wobei der Schritt I unter Verwendung der ersten thermochemischen Reaktoren und anschließend der Schritt II unter Verwendung der zweiten thermochemischen Reaktoren ausgeführt wird oder wobei die Schritte I und II unter Verwendung der ersten thermochemischen Reaktoren ausgeführt werden, und dadurch, dass die gesamte Wärme, die während der Synthesereaktion in den ersten Reaktoren abgegeben wird, zum Zersetzen des Reaktionsprodukts, das in den zweiten Reaktoren enthalten ist, und Kondensieren, in dem Kondensator (CD), des Fluids in Dampfphase, das in den zweiten Reaktoren regeneriert wurde, insbesondere durch Leitung zu den zweiten Reaktoren abgeführt wird, wobei die Kondensation insbesondere bei der Temperatur des Kondensators (CD) stattfindet, die die Temperatur außerhalb des Gehäuses (C) sein kann.

4. Anlage zum Kühlen eines thermisch isolierenden Gehäuses (C) im Wesentlichen bis zu einer Zieltemperatur Tc, die geeignet ist, um die Ausführung des Verfahrens nach einem der Ansprüche 1 bis 3 zu ermöglichen, der Art, umfassend:
- ein thermisch isolierendes Gehäuse (C);
- einen Verdampfer (E), der in dem Gehäuse (C) eingerichtet ist und ein Fluid in Flüssigphase im Gleichgewicht mit seiner Gasphase enthält;
- mindestens einen thermochemischen Reaktor Ri, der eine reaktive Mischung Si enthält, die geeignet ist, um mit dem Fluid in Gasphase zum Ausbilden eines Reaktionsprodukts chemisch zu reagieren, wobei die chemische Synthesereaktion des Reaktionsprodukts exotherm und reversibel ist, wobei der thermochemische Reaktor Ri geeignet ist, um über eine Leitung Li, die mit Mitteln ausgestattet ist, die ein Ventil (Vi) ausbilden, in Fluidkommunikation mit dem Verdampfer (E) gebracht zu werden;
- Wärmeabführmittel (VT1; VT2, Rd1; Rd2);
- Mittel zum Messen der Temperatur in dem thermisch isolierenden Gehäuse (C);
- Mittel zum Erwärmen des oder der thermochemischen Reaktors/Reaktoren Ri, der/die geeignet ist/sind, um die umgekehrte endotherme Zersetzungsreaktion des Reaktionsprodukts zu induzieren, die zu der Regenerierung der reaktiven Mischung und des Fluids in Gasphase führt;
- ferner mindestens n thermochemische Reaktoren Ri+1, wobei n eine ganze Zahl größer als oder gleich 1 ist, wobei jeder Reaktor Ri+1 eine reaktive Mischung Si+1 enthält, die optional mit der reaktiven Mischung Si identisch ist und ebenso geeignet ist, um mit dem Fluid in Gasphase zum Ausbilden eines Reaktionsprodukt chemisch zu reagieren, wobei die chemische Synthesereaktion des Reaktionsprodukts exotherm und reversibel ist, wobei jeder der n thermochemischen Reaktoren geeignet ist, um über eine spezielle Leitung Li+1 in Fluidkommunikation mit dem Verdampfer (E) gebracht zu werden;
- ein Ventil Vi+1, das an jedem der Li+1 Leitungen angebracht ist und das in einer offenen Position die Fluidverbindung zwischen dem Reaktor und dem Verdampfer (E) ermöglicht und in einer geschlossenen Position den Reaktor Ri von dem Verdampfer (E) und den anderen n thermochemischen Reaktoren isoliert
- Mittel zum Erwärmen jedes der thermochemischen Reaktoren Ri+1, die geeignet sind, um die umgekehrte endotherme Zersetzungsreaktion des Reaktionsprodukts zu induzieren, die zu der Regenerierung der reaktiven Mischung und des Fluids in Gasphase führt; und
- Wärmeabführmittel, die zum Abführen der Wärme angepasst sind, die durch die Synthesereaktion jeweils der thermochemischen Reaktoren Ri und Ri+1 erzeugt wird, in denen sie stattfindet;
wobei die Anlage aufweist
- Mittel zum Vergleichen der Differenz zwischen der Temperatur, die in dem Gehäuse (C) gemessen wird, und der Zieltemperatur Tc mit einer gegebenen dritten Abweichung (ΔT3); und/oder
- Mittel zum Bestimmen der Temperatur Tev in dem Verdampfer (E) und/oder des Drucks Pev in dem Verdampfer (E) oder in jedem der Reaktoren Ri und Ri+1;
- Mittel zum Bestimmen der Temperatur Ti in dem Reaktor Ri und in jedem thermochemischen Reaktor Ri+1 der n+1 Reaktoren;
- Mittel zum Bestimmen der Abweichung DTev zwischen der Temperatur des Gehäuses (C) und der Temperatur des Verdampfers (E); und/oder
- Mittel zum Bestimmen der Abweichung DTRi zwischen der bestimmten Temperatur Ti und der Gleichgewichtstemperatur TeSi der reaktiven Mischung Si, die in dem thermochemischen Reaktor Ri enthalten ist, betrachtet bei dem Druck Pevi, der in dem Verdampfer (E) bestimmt wird; und oder
- Mittel zum Vergleichen von DTRi und/oder DTev jeweils mit einer ersten und einer gegebenen zweiten Abweichung (ΔT1; ΔT2) und;
- Mittel zum Steuern der offenen/geschlossenen Position jedes der Ventile Vi und Vi+1, wobei die Steuermittel mit den Vergleichsmitteln gekoppelt und zum Bringen des Verdampfers (E) in Fluidkommunikation mit mindestens einem thermochemischen Reaktor Ri+ 1 angemessen sind, der aus thermochemischen Reaktoren ausgewählt ist, die nicht in Fluidkommunikation mit dem Verdampfer (E) stehen und deren Druck niedriger als der Druck Pevi ist, der in dem Verdampfer (E) bestimmt wird, und/oder deren Temperatur niedriger als ein gegebener Wert ist, wenn die Vergleichsmittel bestimmt haben, dass DTRi und/oder DTev jeweils kleiner als die erste und die zweite Abweichung (ΔT1; ΔT2) ist;
- optional eine Anordnung von mindestens einem externen thermochemischen Reaktor, die von der Anordnung von n Reaktoren verschieden und von dem Reaktor Ri verschieden ist und geeignet ist, um über mindestens eine Leitung, die mit Mitteln ausgestattet ist, die ein Ventil ausbilden, in Fluidkommunikation mit dem Verdampfer (E) gebracht zu werden;
und wobei in der Anlage die Steuermittel mit den Vergleichsmitteln gekoppelt sind und wobei die Steuermittel zum
Bringen des Verdampfers (E) in Fluidkommunikation mit mindestens einem Teil der n Reaktoren, wenn die Abweichung zwischen der Temperatur in dem Gehäuse und der Zieltemperatur Tc gleich der dritten Abweichung ΔT3 ist, oder zum Bringen des Verdampfers (E) in Fluidkommunikation mit der Anordnung von mindestens dem externen thermochemischen Reaktor konfiguriert sind, wenn die Abweichung zwischen der Temperatur in dem Gehäuse und der Zieltemperatur gleich der dritten Abweichung ΔT3 ist.
und wobei mindestens ein Teil der n+1 Reaktoren thermisch verbunden ist, sodass, wenn ein Teil der thermisch verbundenen Reaktoren aufgrund des Öffnens der Mittel, die das Ventil (Vi) ausbilden, in Fluidkommunikation mit dem Verdampfer (E) steht, der verbleibende Teil der thermisch verbundenen Reaktoren von dem Verdampfer (E) isoliert ist, und dadurch, dass der isolierte Teil zum Ermöglichen, dass die Wärme, die durch die Synthesereaktion in den Reaktoren abgegeben wird, die in Fluidkommunikation mit dem Verdampfer (E) sind, durch Leitung abgeführt wird, und ebenso zum Speichern der abgeführten Wärme in wesentlicher Form aufgrund der spezifischen Wärmekapazität des Reaktionsprodukts und/oder der reaktiven Mischung und/oder in latenter Form aufgrund der Zersetzung des Reaktionsprodukts angemessen ist.

5. Anlage nach Anspruch 4, wobei die Mittel zum Abführen der Wärme es ermöglichen, die Wärme durch erzwungene Konvektion abzuführen, und insbesondere mindestens einen Lüfter aufweisen und/oder dadurch, dass die Mittel zum Abführen der Wärme geeignet sind, um die Wärme durch Leitung abzuführen, und optional die Speicherung der abgeführten Wärme in wesentlicher Form durch Speicherung in einem Material und/oder in latenter Form aufgrund einer Änderung eines Aggregatzustands und/oder einer chemischen Reaktion des Materials zu ermöglichen, in das die Wärme abgeführt wird.

6. Anlage nach Anspruch 4 oder 5, wobei ein Teil der thermisch verbundenen Reaktoren ineinander enthalten und insbesondere paarweise ineinander verschachtelt sind, sodass eine thermische Verbindung insbesondere durch Leitung ermöglicht wird, wobei Paare von thermisch verbundenen thermochemischen Reaktoren ausgebildet werden.

7. Anlage nach Anspruch 4 oder 6, wobei mindestens ein Teil der thermisch verbundenen Reaktoren hohle Platten aufweist, die die reaktive Mischung einschließen, und wobei die Platten von zwei Reaktoren ineinander eingeschoben sind, sodass die thermochemischen Reaktoren durch Leitung und/oder Konvektion thermisch verbunden sind.

8. Anlage nach einem der Ansprüche 6 oder 7, wobei die ersten Reaktoren jedes der Paare von thermisch verbundenen thermochemischen Reaktoren jeweils durch eine Leitung, die für jeden der Reaktoren speziell und mit Mitteln ausgestattet ist, die ein Ventil ausbilden, an den Verdampfer (E) angeschlossen sind, wobei sie ferner mindestens einen Kondensator (CD) aufweist, der durch eine Leitung, die mit Mitteln ausgestattet ist, die ein Ventil ausbilden, an jeden der zweiten Reaktoren angeschlossen ist, wobei optional die zweiten thermochemischen Reaktoren ebenso jeweils durch eine Leitung, die für jeden Reaktor speziell und mit Mitteln ausgestattet ist, die ein Ventil ausbilden, an den Verdampfer (E) angeschlossen sind, und dadurch, dass die Steuermittel mit den Vergleichsmitteln gekoppelt und zum Bringen des Verdampfers (E) in Fluidkommunikation entweder mit einem Teil der ersten Reaktoren, die nicht mit dem Verdampfer (E) verbunden waren, oder mit den zweiten Reaktoren angemessen sind, wenn letztere an den Verdampfer (E) angeschlossen werden können, wenn die Vergleichsmittel bestimmt haben, dass DTRi und/oder DTev jeweils kleiner als die erste und die zweite Abweichung (ΔT1; ΔT2) ist.

9. Anlage nach einem der vorstehenden Ansprüche, wobei jeder thermochemische Reaktor Ri eine Wand aufweist, die eine Ummantelung definiert, die die reaktive Mischung einschließt, und wobei die Mittel zum Bestimmen der Temperatur jedes thermochemischen Reaktors Ri Mittel zum Messen der Temperatur der Wand jedes Reaktors Ri aufweisen.

## Claims

1. Method for refrigerating a thermally insulating box (C) substantially to a target temperature Tc, in which method:
- an evaporator (E) is placed in said box (C), said evaporator (E) containing a fluid in the liquid phase in equilibrium with the vapor phase thereof;
- said evaporator (E) is placed in fluid communication with at least one thermochemical reactor Ri comprising a mixture comprising at least one reactive compound Si capable of reacting chemically with said fluid in the gas phase to form a reaction product, said chemical reaction for the synthesis of said reaction product being exothermic and reversible;
- simultaneously, all or part of the heat produced at said reactor Ri is discharged;
- n other thermochemical reactors are provided, each containing a mixture containing at least one reactive compound optionally identical to said reactive mixture Si, n being an integer equal to or greater than 1;
- optionally, a set of at least one external thermochemical reactor (Rm) which is distinct from said set of n reactors and distinct from said reactor Ri is provided;
wherein, in the method,
I) the pressure Pevi prevailing in the set formed by said evaporator (E) placed in fluid communication with said thermochemical reactor(s) Ri and/or the temperature of said thermochemical reactor(s) Ri placed in fluid communication with said evaporator (E) is determined;
II) when the temperature difference DTRi between the temperature of said reactor(s) Ri connected to said evaporator (E) and the equilibrium temperature TeSi of said reactive mixture(s) Si contained in said thermochemical reactor(s) Ri at the pressure Pevi is equal to a first given difference (ΔT1) and/or when the temperature difference DTev between said evaporator (E) and the inside of said box (C) is equal to a second given difference (ΔT2), said reactor(s) Ri is/are isolated from said evaporator (E) and said evaporator (E) is placed in fluid communication with at least one thermochemical reactor Ri+1 selected from the n other thermochemical reactors which are not connected to said evaporator (E) and of which the pressure Pevi is lower and/or the temperature is lower than a given value, and simultaneously all or part of the heat produced at said reactor(s) Ri+1 connected to said evaporator (E) is also discharged;
III) steps I and II are repeated with reference to said thermochemical reactor(s) Ri+1 in fluid communication with said evaporator (E) until the difference between said temperature Tc in said box (C) and said target temperature Tc is equal to a third difference ΔT3; and
- optionally, the difference between said temperature Tc in said box (C) and said target temperature Tc is kept less than or equal to said third difference ΔT3 either by repeating steps I and II by placing said evaporator (E) in fluid communication with at least one of the n+1 thermochemical reactors of said installation in order to keep the temperature in said box (C) substantially equal to said target temperature Tc, or by placing said evaporator (E) in fluid communication with said set of at least one external thermochemical reactor (Rm) which is distinct from said set of n reactors and distinct from said reactor Ri;
and wherein some of said n+1 thermochemical reactors are thermally connected to one another, and some of said thermally connected reactors are placed in fluid communication with said evaporator (E), the other thermally connected reactors being isolated from said evaporator (E), and the heat given off by the exothermic synthesis reaction in said reactors in fluid communication with said evaporator (E) is discharged at least partially by conduction towards said reactors isolated from said evaporator (E).

2. Method according to claim 1, wherein said thermally connected thermochemical reactors are thermally connected in pairs.

3. Method according to claim 2, wherein said thermally connected reactors form pairs of thermochemical reactors, and said second thermochemical reactor of each of said pairs is placed in fluid communication with at least one condenser (CD), said second thermochemical reactor containing a quantity of reaction product obtained during said chemical synthesis reaction and optionally a mixture containing a reactive compound Si which has not yet reacted, wherein said step I is carried out using said first thermochemical reactors and then said step II is carried out using said second thermochemical reactors or wherein said steps I and II are carried out using said first thermochemical reactors, and all the heat given off during the synthesis reaction in said first reactors is discharged, in particular by conduction, towards said second reactors in order to decompose said reaction product contained in said second reactors and condense, in said condenser (CD), said fluid in the vapor phase which has been regenerated in said second reactors, the condensation taking place in particular at the temperature of said condenser (CD), which can be the temperature outside said box (C).

4. Installation for refrigerating a thermally insulating box (C) substantially to a target temperature Tc, which installation is suitable for implementing the method according to any of claims 1 to 3, the installation comprising:
- a thermally insulating box (C);
- an evaporator (E) arranged in said box (C) and containing a fluid in the liquid phase in equilibrium with the gas phase thereof;
- at least one thermochemical reactor Ri containing a reactive mixture Si capable of reacting chemically with said fluid in the gas phase to form a reaction product, said chemical reaction for the synthesis of said reaction product being exothermic and reversible, said thermochemical reactor Ri being capable of being placed in fluid communication with said evaporator (E) via a duct Li provided with means forming a valve (Vi);
- heat discharge means (VT1; VT2, Rd1; Rd2);
- means for measuring the temperature in said thermally insulating box (C);
- means for heating said thermochemical reactor(s) Ri, which means are capable of inducing the reverse endothermic reaction for the decomposition of said reaction product, resulting in the regeneration of said reactive mixture and of said fluid in the gas phase;
- also at least n thermochemical reactors Ri+1, n being an integer greater than or equal to 1, each reactor Ri+1 containing a reactive mixture Si+1, optionally identical to said reactive mixture Si and also capable of reacting chemically with said fluid in the gas phase to form a reaction product, said chemical reaction for the synthesis of said reaction product being exothermic and reversible, each of said n thermochemical reactors being capable of being placed in fluid communication with said evaporator (E) via a specific duct Li+1;
- a valve Vi+1 which is mounted on each of said ducts Li+1 and which, in the open position, allows the fluid connection between said reactor and said evaporator (E) and, in the closed position, isolates said reactor Ri from said evaporator (E) and from said other n thermochemical reactors;
- means for heating each of said thermochemical reactors Ri+1, which means are capable of inducing the reverse endothermic reaction for the decomposition of said reaction product, resulting in the regeneration of said reactive mixture and of said fluid in the gas phase; and
- heat discharge means designed to discharge the heat generated by said synthesis reaction from each of said thermochemical reactors Ri and Ri+1 in which said reaction takes place;
wherein the installation includes
- means for comparing the difference between the temperature measured in said box (C) and said target temperature Tc with a third given difference (ΔT3); and/or
- means for determining the temperature Tev in said evaporator (E) and/or the pressure Pev in said evaporator (E) or in each of said reactors Ri and Ri+1;
- means for determining the temperature Ti in said reactor Ri and in each thermochemical reactor Ri+1 of said n+1 reactors;
- means for determining the difference DTev between the temperature of said box (C) and the temperature of said evaporator (E); and/or
- means for determining the difference DTRi between said determined temperature Ti and the equilibrium temperature TeSi of said reactive mixture Si contained in said thermochemical reactor Ri considered at said pressure Pevi determined in said evaporator (E); and/or
- means for comparing DTRi and/or DTev with a first and a second given difference (ΔT1; ΔT2), respectively; and
- means for controlling the open/closed position of each of said valves Vi and Vi+1, said control means being coupled to said comparison means and being designed to place said evaporator (E) in fluid communication with at least one thermochemical reactor Ri+1 selected from the thermochemical reactors which are not in fluid communication with said evaporator (E) and of which the pressure is lower than the pressure Pevi determined in said evaporator (E) and/or the temperature is lower than a given value, when said comparison means have determined that DTRi and/or DTev is/are lower than said first and said second difference (ΔT1; ΔT2), respectively;
- optionally a set of at least one external thermochemical reactor which is distinct from said set of n reactors and distinct from said reactor Ri and capable of being placed in fluid communication with said evaporator (E) via at least one duct provided with means forming a valve;
and wherein, in the installation, said control means are coupled to the comparison means,
and wherein said control means are configured to place said evaporator (E) in fluid connection with at least some of said n reactors when the difference between the temperature in said box and said target temperature Tc is equal to said third difference ΔT3 or to place the evaporator (E) in fluid connection with said set of at least one external thermochemical reactor when the difference between the temperature in said box and the target temperature is equal to said third difference ΔT3,
and wherein at least some of said n+1 reactors are thermally connected such that when some of said thermally connected reactors are in fluid communication with said evaporator (E) as a result of said means forming a valve (Vi) opening, the remaining thermally connected reactors are isolated from said evaporator (E), and said isolated reactors are designed to allow the heat given off by said synthesis reaction in said reactors in fluid communication with said evaporator (E) to be discharged by conduction and also to store said discharged heat in a sensible form, resulting from the specific heat capacity of the reaction product and/or of the reactive mixture, and/or in a latent form, resulting from the decomposition of said reaction product.

5. Installation according to claim 4, wherein said heat discharge means make it possible to discharge the heat by forced convection and in particular comprise at least one fan, and/or said heat discharge means are capable of discharging the heat by conduction and optionally make it possible to store the discharged heat in a sensible form, by storing said heat in a material, and/or in a latent form, resulting from a change in physical state and/or a chemical reaction of the material into which the heat is discharged.

6. Installation according to either claim 4 or claim 5, wherein some of said thermally connected reactors are contained one inside the other and in particular nested one inside the other, in pairs, so as to allow a thermal connection in particular by conduction by forming pairs of thermally connected thermochemical reactors.

7. Installation according to either claim 4 or claim 6, wherein at least some of said thermally connected reactors comprise hollow plates which enclose said reactive mixture and wherein the plates of two reactors are interposed with one another so as to thermally connect said thermochemical reactors by conduction and/or convection.

8. Installation according to either claim 6 or claim 7, wherein said first reactors of each of said pairs of thermally connected thermochemical reactors are each connected to said evaporator (E) by a duct which is specific to each of said reactors and provided with means forming a valve, wherein said installation further comprises at least one condenser (CD) which is connected to each of said second reactors by a duct provided with means forming a valve, wherein, optionally, said second thermochemical reactors are also each connected to said evaporator (E) by a duct which is specific to each reactor and provided with means forming a valve, and said control means are coupled to said comparison means and are designed to place said evaporator (E) in fluid communication either with some of said first reactors which were not connected to said evaporator (E) or with said second reactors, when the latter can be connected to said evaporator (E), when said comparison means have determined that DTRi and/or DTev is/are lower than said first and said second difference (ΔT1; ΔT2), respectively.

9. Installation according to any of the preceding claims, wherein each thermochemical reactor Ri comprises a wall which defines a housing which encloses said reactive mixture and wherein said means for determining the temperature of each thermochemical reactor Ri comprise means for measuring the temperature of the wall of each reactor Ri.
